# EUROPEAN PATENT APPLICATION

(11) **EP 4 801 149 A1**
(43) Date of publication of application: **02.09.2026**
(21) Application number: 24895740.9
(22) Date of filing: 08.08.2024
(51) Int. Cl.: H04W 72/0446

(54) **COMMUNICATION METHOD AND APPARATUS**

(30) Priority: 30.11.2023 CN 202311637463
(71) Applicant: Huawei Technologies Co., Ltd., Shenzhen, Guangdong 518129 (CN)
(72) Inventor: HOU, Hailong, Shenzhen, Guangdong 518129 (CN); GUO, Zhiheng, Shenzhen, Guangdong 518129 (CN)
(74) Representative: Goddar, Heinz J.
(86) International application number: PCT/CN2024/110822
(87) International publication number: WO 2025/112637

(57) **Abstract**

This application provides a communication method and apparatus, and relates to the field of communication technologies. The method includes: The network device determines L demodulation reference signal DMRS antenna ports from N DMRS antenna ports, where the N DMRS antenna ports are configured for physical downlink control channel PDCCH transmission, and orthogonal multiplexing is performed between any two of the N DMRS antenna ports through at least one of the following: time division multiplexing TDM, frequency division multiplexing FDM, or code division multiplexing CDM. N is a positive integer greater than or equal to 2, and L is a positive integer less than or equal to N. The network device sends a DMRS of a first PDCCH through the L DMRS antenna ports.

## Description

This application claims priority to Chinese Patent Application No. 202311637463.4, filed with the China National Intellectual Property Administration on November 30, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With development of communication technologies, a multi-user multiple-input multiple-output (multi-user multiple-input multiple-output, MU-MIMO) technology is provided in a new radio (new radio, NR) communication system. To be specific, a plurality of terminal devices are allowed to communicate with a network device on a same time-frequency resource, and the plurality of terminal devices share the same time-frequency resource in a space division manner.

However, when MU-MIMO is used for a plurality of physical downlink control channels (physical downlink control channels, PDCCHs) for transmission, demodulation reference signals (demodulation reference signals, DMRSs) on the plurality of PDCCHs may not be guaranteed to be orthogonal. Consequently, PDCCH demodulation performance is limited, and PDCCH capacity is also affected.

### SUMMARY

To resolve the foregoing technical problem, this application provides a communication method and apparatus, so that PDCCH demodulation performance and capacity can be improved. To achieve the foregoing objective, this application adopts the following technical solutions.

A first aspect provides a communication method. The method may be performed by a network device. Unless otherwise specified, the "network device" in this application may be the network device itself, or may be a component (such as a processor, a chip, or a chip system) in the network device, or may be a logic module or software that can implement all or some functions of the network device. The following uses an example in which an execution body is the network device for description. The method includes:

The network device determines L demodulation reference signal DMRS antenna ports from N DMRS antenna ports, where the N DMRS antenna ports are configured for physical downlink control channel PDCCH transmission, and orthogonal multiplexing is performed between any two of the N DMRS antenna ports through at least one of the following: time division multiplexing TDM, frequency division multiplexing FDM, or code division multiplexing CDM. N is a positive integer greater than or equal to 2, and L is a positive integer less than or equal to N. The network device sends a DMRS of a first PDCCH through the L DMRS antenna ports.

TDM between any two DMRS antenna ports means that different DMRS antenna ports are associated with or use different time-domain resources. In this way, PDCCH DMRSs transmitted on different DMRS antenna ports may use different time-domain resources, thereby ensuring that DMRSs of different PDCCHs are mutually orthogonal.

FDM between any two DMRS antenna ports means that different DMRS antenna ports are associated with or use different frequency-domain resources. In this way, PDCCH DMRSs transmitted on different DMRS antenna ports may use different frequency-domain resources, thereby ensuring that DMRSs of different PDCCHs are mutually orthogonal.

CDM between any two DMRS antenna ports means that different DMRS antenna ports are associated with or use different orthogonal cover codes OCCs. In this way, PDCCH DMRSs transmitted on different DMRS antenna ports may use different orthogonal cover codes, thereby ensuring that DMRSs of different PDCCHs are mutually orthogonal.

For the DMRS of the first PDCCH, that the network device sends the DMRS of the first PDCCH through the L DMRS antenna ports includes: The network device sends the DMRS of the first PDCCH through the L DMRS antenna ports and at least one of the time-domain resource, the frequency-domain resource, or the orthogonal cover code OCC that is associated with the L DMRS antenna ports.

In addition, the first PDCCH further includes data information. For the data information of the first PDCCH, that the network device sends the data information of the first PDCCH through the L DMRS antenna ports includes: The network device sends the data information of the first PDCCH through the L antenna ports, instead of sending the data information of the first PDCCH through any one of the time-domain resource, the frequency-domain resource, and the OCC that are associated with the L DMRS antenna ports.

Optionally, corresponding to L being less than N, the network device may further perform the following operations: The network device determines L' DMRS antenna ports from the N DMRS antenna ports, where any one of the L' DMRS antenna ports is different from any one of the L DMRS antenna ports. L' is a positive integer less than or equal to N. The network device sends a DMRS of a second PDCCH through the L' DMRS antenna ports. The second PDCCH is different from the first PDCCH.

In this way, because the N DMRS antenna ports can be configured for PDCCH transmission, and the N DMRS antenna ports are mutually orthogonal, when different PDCCH DMRSs are transmitted through different DMRS antenna ports in the N DMRS antenna ports, DMRSs of different PDCCHs are mutually orthogonal. For example, the DMRS of the first PDCCH is orthogonal to a DMRS of another PDCCH, helping improve PDCCH demodulation performance and PDCCH capacity, and ensuring PDCCH performance.

In a possible design, when orthogonal multiplexing is performed between any two of the N DMRS antenna ports through the CDM, any two of the N DMRS antenna ports are associated with different frequency domain orthogonal cover codes OCCs and/or different time domain-OCCs, for the any two DMRS antenna ports to be mutually orthogonal.

In a possible design, when orthogonal multiplexing is performed between any two of the N DMRS antenna ports through the CDM and the FDM,
the N DMRS antenna ports belong to at least two CDM groups, and each of the at least two CDM groups includes some of the N DMRS antenna ports, where quantities of DMRS antenna ports included in different CDM groups in the at least two CDM groups may be the same or may be different;
any two DMRS antenna ports in any one of the at least two CDM groups are associated with different frequency domain-OCCs and/or different time domain-OCCs, for any two DMRS antenna ports in each CDM group to be mutually orthogonal; and
any two of the at least two CDM groups are associated with different frequency-domain resources, for any two DMRS antenna ports in different CDM groups to be mutually orthogonal.

In a possible design, a transmission resource of the first PDCCH includes a plurality of resource element groups REGs, each of the plurality of REGs includes M first resource elements REs, the M first REs are configured to carry a DMRS of a PDCCH, and M is a positive integer greater than 3. Each of the plurality of REGs includes one orthogonal frequency division multiplexing OFDM symbol in time domain and one resource block RB in frequency domain.

For example, M is an even number, and M = 4.

In this way, the N DMRS antenna ports can support the associated frequency domain-OCC, avoid excessively large DMRS overheads, and further ensure DMRS performance.

In a possible design, a time-domain resource of the first PDCCH includes K symbols, and the K symbols include a first symbol and a second symbol. K is a positive integer greater than or equal to 2. The first PDCCH includes data information of the first PDCCH and the DMRS of the first PDCCH. The data information of the first PDCCH occupies the first symbol, and the DMRS of the first PDCCH occupies the second symbol. In other words, the data information of the first PDCCH and the DMRS of the first PDCCH are transmitted through TDM.

In a possible design, a length of the frequency domain-OCC is 2 or 4, and a length of the time domain-OCC is 2 or 4.

In a possible design, a value of the N includes 2^{T} or 3*Q, and T and Q are positive integers.

For example, the value of the N includes one of the following: 2, 3, 4, 6, 8, 12, or 16.

In a possible design, the method further includes: The network device sends first information. The first information indicates the L antenna ports. The first information is carried in one of the following: radio resource control RRC signaling, a system information block SIB, downlink control information DCI, or a media access control control element MAC CE.

In other words, the network device indicates, to a first terminal device, which DMRS antenna port(s) for detecting the first PDCCH, to simplify computational complexity on a terminal device side.

In a possible design, that the first information indicates the L antenna ports includes: The first information indicates a first terminal device to use the L DMRS antenna ports to detect the first PDCCH on a first search space set SS set.

The first SS set is all SS sets associated with all control resource sets CORESETs of the first terminal device. In other words, the network device indicates the DMRS antenna port at the granularity of terminal devices by using the first information.

Alternatively, the first SS set is all SS sets associated with all CORESETs on a first bandwidth part BWP, and the first BWP is one of all BWPs of the first terminal device. In other words, the network device indicates the DMRS antenna port at the granularity of BWPs by using the first information.

Alternatively, the first SS set is all SS sets associated with a first CORESET, and the first CORESET is one of all CORESETs of the first terminal device. In other words, the network device indicates the DMRS antenna port at the granularity of CORESETs by using the first information.

Alternatively, the first SS set is one of all SS sets of the first terminal device. In other words, the network device indicates the DMRS antenna port at the granularity of SS sets by using the first information.

In a possible design, that the first information indicates the L antenna ports includes: The first information indicates a first terminal device to use the L DMRS antenna ports to detect the first PDCCH on all SS sets associated with a first CORESET group, where the first CORESET group is one of all CORESET groups of the first terminal device. In other words, the network device indicates the DMRS antenna port at the granularity of CORESET groups by using the first information.

In a possible design, that the first information indicates the L antenna ports includes: The first information indicates a first terminal device to use the L DMRS antenna ports to detect the first PDCCH on a first SS set group, where the first SS set group is one of all SS set groups of the first terminal device. In other words, the network device indicates the DMRS antenna port at the granularity of SS set groups by using the first information.

In a possible design, the DCI corresponds to a first terminal device group, and the first terminal device group includes at least one terminal device. The first information is carried in a first information block of the DCI, the first information block corresponds to one or more terminal devices in the first terminal device group, and the one or more terminal devices include the first terminal device.

In other words, the network device indicates the DMRS antenna port to different terminal devices by using the same DCI.

In a possible design, the L DMRS antenna ports are determined based on a radio network temporary identifier RNTI of the first terminal device, for example, a cell radio network temporary identifier C-RNTI of the first terminal device.

For example, L = 1. A sequence number of the L DMRS antenna port satisfies *n_{RNTI} mod N*. Herein, *n_{RNTI}* represents a value of the RNTI, and *mod* is a modulo operation.

In a possible design, the L DMRS antenna ports are determined based on a radio network temporary identifier RNTI of the first terminal device and a sequence number of a first time unit. For example, the RNTI of the first terminal device may be a C-RNTI.

For example, L = 1. A sequence number of the L DMRS antenna port satisfies ${Y}_{{n}_{S , F}^{μ}} mod N , {Y}_{{n}_{s , f}^{μ}} = \left(A⋅{Y}_{{n}_{s , f}^{μ} - 1}\right) mod D$, and *Y*₋₁ = *n_{RNTI}*. Herein, *n_{RNTI}* represents a value of the RNTI, ${n}_{s , f}^{μ}$ represents the sequence number of the first time unit, *A* and *D* are positive integers, and *mod* is a modulo operation.

In a possible design, the L DMRS antenna ports are determined based on a radio network temporary identifier RNTI of the first terminal device, a sequence number of a first time unit, and a sequence number of a first CORESET. For example, the RNTI of the first terminal device may be a C-RNTI.

For example, L = 1. A sequence number of the L DMRS antenna port satisfies ${Y}_{p , {n}_{s , f}^{μ}} mod N , {Y}_{p , {n}_{s , f}^{μ}} = \left({A}_{p}⋅{Y}_{p , {n}_{s , f}^{μ} - 1}\right) mod D$, and *Y*_{*p,*-1} = *n_{RNTI}*. Herein, *n_{RNTI}* represents a value of the RNTI, ${n}_{s , f}^{μ}$ represents the sequence number of the first time unit, *p* represents the sequence number of the first CORESET, *D* is a positive integer, *Aₚ* is a positive integer determined based on *p*, and *mod* is a modulo operation.

A second aspect provides a communication method. The method may be performed by a first terminal device. Unless otherwise specified, the "first terminal device" in this application may be the first terminal device itself, or may be a component (such as a processor, a chip, or a chip system) in the first terminal device, or may be a logic module or software that can implement all or some functions of the first terminal device. The following uses an example in which an execution body is the first terminal device for description. The method includes: The first terminal device determines L demodulation reference signal DMRS antenna ports, where the L DMRS antenna ports are one or more of N DMRS antenna ports, the N DMRS antenna ports are configured for physical downlink control channel PDCCH transmission, and orthogonal multiplexing is performed between any two of the N DMRS antenna ports through at least one of the following: time division multiplexing TDM, frequency division multiplexing FDM, or code division multiplexing CDM. N is a positive integer greater than or equal to 2, and L is a positive integer less than or equal to N. The first terminal device receives a DMRS of a first PDCCH through the L DMRS antenna ports.

In a possible design, when orthogonal multiplexing is performed between any two of the N DMRS antenna ports through the CDM, any two of the N DMRS antenna ports are associated with different frequency domain orthogonal cover codes OCCs and/or different time domain-OCCs, for the any two DMRS antenna ports to be mutually orthogonal.

In a possible design, when orthogonal multiplexing is performed between any two of the N DMRS antenna ports through the CDM and the FDM,
the N DMRS antenna ports belong to at least two CDM groups, and each of the at least two CDM groups includes some of the N DMRS antenna ports, where quantities of DMRS antenna ports included in different CDM groups in the at least two CDM groups may be the same or may be different;
any two DMRS antenna ports in any one of the at least two CDM groups are associated with different frequency domain-OCCs and/or different time domain-OCCs, for any two DMRS antenna ports in each CDM group to be mutually orthogonal; and
any two of the at least two CDM groups are associated with different frequency-domain resources, for any two DMRS antenna ports in different CDM groups to be mutually orthogonal.

In a possible design, a transmission resource of the first PDCCH includes a plurality of resource element groups REGs, each of the plurality of REGs includes M first resource elements REs, the M first REs are configured to carry a DMRS of a PDCCH, and M is a positive integer greater than 3. Each of the plurality of REGs includes one orthogonal frequency division multiplexing OFDM symbol in time domain and one resource block RB in frequency domain.

For example, M is an even number, and M = 4.

In a possible design, a time-domain resource of the first PDCCH includes K symbols, and the K symbols include a first symbol and a second symbol. K is a positive integer greater than or equal to 2. The first PDCCH includes data information of the first PDCCH and the DMRS of the first PDCCH. The data information of the first PDCCH occupies the first symbol, and the DMRS of the first PDCCH occupies the second symbol.

In a possible design, a length of the frequency domain-OCC is 2 or 4, and a length of the time domain-OCC is 2 or 4.

In a possible design, a value of the N includes 2^{T} or 3*Q, and T and Q are positive integers.

For example, the value of the N includes one of the following: 2, 3, 4, 6, 8, 12, or 16.

In a possible design, the method further includes: The first terminal device receives first information. The first information indicates the L antenna ports. The first information is carried in one of the following: radio resource control RRC signaling, a system information block SIB, downlink control information DCI, or a media access control control element MAC CE.

In a possible design, that the first information indicates the L antenna ports includes: The first information indicates the first terminal device to use the L DMRS antenna ports to detect the first PDCCH on a first search space set SS set.

The first SS set is all SS sets associated with all control resource sets CORESETs of the first terminal device.

Alternatively, the first SS set is all SS sets associated with all CORESETs on a first bandwidth part BWP, and the first BWP is one of all BWPs of the first terminal device.

Alternatively, the first SS set is all SS sets associated with a first CORESET, and the first CORESET is one of all CORESETs of the first terminal device.

Alternatively, the first SS set is one of all SS sets of the first terminal device.

In a possible design, that the first information indicates the L antenna ports includes: The first information indicates the first terminal device to use the L DMRS antenna ports to detect the first PDCCH on all SS sets associated with a first CORESET group, where the first CORESET group is one of all CORESET groups of the first terminal device.

In a possible design, that the first information indicates the L antenna ports includes: The first information indicates the first terminal device to use the L DMRS antenna ports to detect the first PDCCH on a first SS set group, where the first SS set group is one of all SS set groups of the first terminal device.

In a possible design, the DCI corresponds to a first terminal device group, and the first terminal device group includes at least one terminal device. The first information is carried in a first information block of the DCI, the first information block corresponds to one or more terminal devices in the first terminal device group, and the one or more terminal devices include the first terminal device.

In a possible design, the L DMRS antenna ports are determined based on a radio network temporary identifier RNTI of the first terminal device.

For example, L = 1. A sequence number of the L DMRS antenna port satisfies *n_{RNTI} mod N.* Herein, *n_{RNTI}* represents a value of the RNTI.

In a possible design, the L DMRS antenna ports are determined based on a radio network temporary identifier RNTI of the first terminal device and a sequence number of a first time unit.

For example, L = 1. A sequence number of the L DMRS antenna port satisfies ${Y}_{{n}_{s , f}^{μ}} mod N , {Y}_{{n}_{s , f}^{μ}} = \left(A⋅{Y}_{{n}_{s , f}^{μ} - 1}\right) mod D$*,* and *Y*₋₁ *= n_{RNTI}.* Herein, *n_{RNTI}* represents a value of the RNTI, ${n}_{s , f}^{μ}$ represents the sequence number of the first time unit, and *A* and *D* are positive integers.

In a possible design, the L DMRS antenna ports are determined based on a radio network temporary identifier RNTI of the first terminal device, a sequence number of a first time unit, and a sequence number of a first CORESET.

For example, L = 1. A sequence number of the L DMRS antenna port satisfies ${Y}_{p , {n}_{s , f}^{μ}} mod N , {Y}_{p , {n}_{s , f}^{μ}} = \left({A}_{p}⋅{Y}_{p , {n}_{s , f}^{μ} - 1}\right) mod D$, and *Y*_{*p,*-1} *= n_{RNTI}.* Herein, *n_{RNTI}* represents a value of the RNTI, ${n}_{s , f}^{μ}$ represents the sequence number of the first time unit, *p* represents the sequence number of the first CORESET, *D* is a positive integer, and *Aₚ* is a positive integer determined based on *p*.

For technical effects achieved by the second aspect or any one of the designs in the second aspect, refer to the technical effects achieved by different designs in the first aspect. Details are not described herein again.

A third aspect provides a communication apparatus configured to implement the foregoing methods. The communication apparatus includes a corresponding module, unit, or means (means) for implementing the method. The module, unit, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and any possible implementations thereof. The transceiver module may also be referred to as a transceiver unit, and is configured to implement a sending function and/or a receiving function in any one of the foregoing aspects and any possible implementations thereof. The transceiver module may include a transceiver circuit, a transceiver machine, a transceiver, or a communication interface.

In some possible designs, the transceiver module includes a sending module and/or a receiving module, respectively configured to implement the sending function or the receiving function in any one of the foregoing aspects and any possible implementations thereof.

A fourth aspect provides a communication apparatus including a processor and a memory. The processor is coupled to the memory. The memory stores program instructions. When the program instructions stored by the memory are executed by the processor, the communication apparatus is enabled to perform the method according to any one of the foregoing aspects or any one of the possible designs thereof.

A fifth aspect provides a communication apparatus including a processor. The processor is configured to execute a computer program or instructions, for the communication apparatus to perform the method according to any one of the foregoing aspects or the method according to any one of the possible designs thereof. Optionally, the communication apparatus further includes a memory. The memory may be coupled to the processor. Alternatively, the memory may be independent of the processor. For example, the memory and the processor are two independent modules. The memory may be located outside the communication apparatus, or may be located inside the communication apparatus.

A sixth aspect provides a computer-readable storage medium. The computer-readable storage medium stores a computer program or instructions. When the computer program or the instructions are run, the method according to any one of the foregoing aspects or the method according to any one of the possible designs thereof is performed.

A seventh aspect provides a computer program product including instructions. When the computer program product is run, the method according to any one of the foregoing aspects or the method according to any one of the possible designs thereof is performed.

The communication apparatus provided according to any one of the third aspect to the seventh aspect may be the network device in the first aspect, or a component included in the network device, such as a chip or a chip system; or the communication apparatus may be the first terminal device in the second aspect, or a component included in the first terminal device, such as a chip or a chip system. When the apparatus is a chip system, the chip system may include a chip, or may include a chip and another discrete device.

It may be understood that, when the communication apparatus provided according to any one of the third aspect to the seventh aspect is a chip, a sending action/function of the communication apparatus may be understood as outputting information, and a receiving action/function of the communication apparatus may be understood as inputting information.

An eighth aspect provides a communication apparatus, configured to implement the method according to any one of the foregoing aspects or the method according to any one of the possible designs thereof. Optionally, the communication apparatus includes a terminal device, a network device, a chip system, or a chip. The terminal device may be referred to as a first terminal device.

For technical effects achieved by any one of the designs in the third aspect to the eighth aspect, refer to the technical effects achieved by different designs in the first aspect. Details are not described herein again.

### BRIEF DESCRIPTION OF DRAWINGS

FIG. 1 is a diagram of an architecture of a communication system according to an embodiment of this application;
FIG. 2 is a diagram of configuration of a control resource set according to an embodiment of this application;
FIG. 3a is a diagram of distribution of a time-frequency resource of a PDCCH according to an embodiment of this application;
FIG. 3b is a diagram of distribution of a time-frequency resource of a control resource set according to an embodiment of this application;
FIG. 3c is another diagram of distribution of a time-frequency resource of a control resource set according to an embodiment of this application;
FIG. 4 is a diagram of distribution of locations of a demodulation reference signal according to an embodiment of this application;
FIG. 5 is a schematic flowchart of a communication method according to an embodiment of this application;
FIG. 6 is another diagram of distribution of locations of a demodulation reference signal according to an embodiment of this application;
FIG. 7 is a diagram of distribution of orthogonal cover codes according to an embodiment of this application;
FIG. 8 is another diagram of distribution of orthogonal cover codes according to an embodiment of this application;
FIG. 9 is still another diagram of distribution of orthogonal cover codes according to an embodiment of this application;
FIG. 10 is still another diagram of distribution of orthogonal cover codes according to an embodiment of this application;
FIG. 11 is still another diagram of distribution of orthogonal cover codes according to an embodiment of this application;
FIG. 12 is still another diagram of distribution of orthogonal cover codes according to an embodiment of this application;
FIG. 13 is still another diagram of distribution of orthogonal cover codes according to an embodiment of this application;
FIG. 14 is still another diagram of distribution of orthogonal cover codes according to an embodiment of this application;
FIG. 15 is still another diagram of distribution of orthogonal cover codes according to an embodiment of this application;
FIG. 16 is still another diagram of distribution of orthogonal cover codes according to an embodiment of this application;
FIG. 17 is a schematic flowchart of another communication method according to an embodiment of this application;
FIG. 18 is a diagram of distribution of information blocks according to an embodiment of this application;
FIG. 19 is a schematic flowchart of still another communication method according to an embodiment of this application;
FIG. 20 is a diagram of a structure of a communication apparatus according to an embodiment of this application;
FIG. 21 is a diagram of a structure of another communication apparatus according to an embodiment of this application; and
FIG. 22 is a diagram of a structure of another communication apparatus according to an embodiment of this application.

### DESCRIPTION OF EMBODIMENTS

The following describes technical solutions in this application with reference to accompanying drawings.

The terms "system" and "network" are interchangeable in this application. All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the words such as "example" and "for example" mean giving an example, an illustration, or a description. Any embodiment or design scheme described as an "example" in this application should not be explained as being more preferred or having more advantages than another embodiment or design scheme. To be precise, the word "example" is for presenting a concept in a specific manner.

In embodiments of this application, "of (of)", "corresponding, relevant (corresponding, relevant)", and "corresponding (corresponding)" may be interchangeably used sometimes. It should be noted that meanings expressed by the terms are consistent when differences between the terms are not emphasized.

Network architectures and service scenarios described in embodiments of this application are intended to describe the technical solutions in embodiments of this application more clearly, and do not constitute a limitation on the technical solutions provided in embodiments of this application. A person of ordinary skill in the art may know that, with the evolution of the network architectures and the emergence of new service scenarios, the technical solutions provided in embodiments of this application are also applicable to similar technical problems.

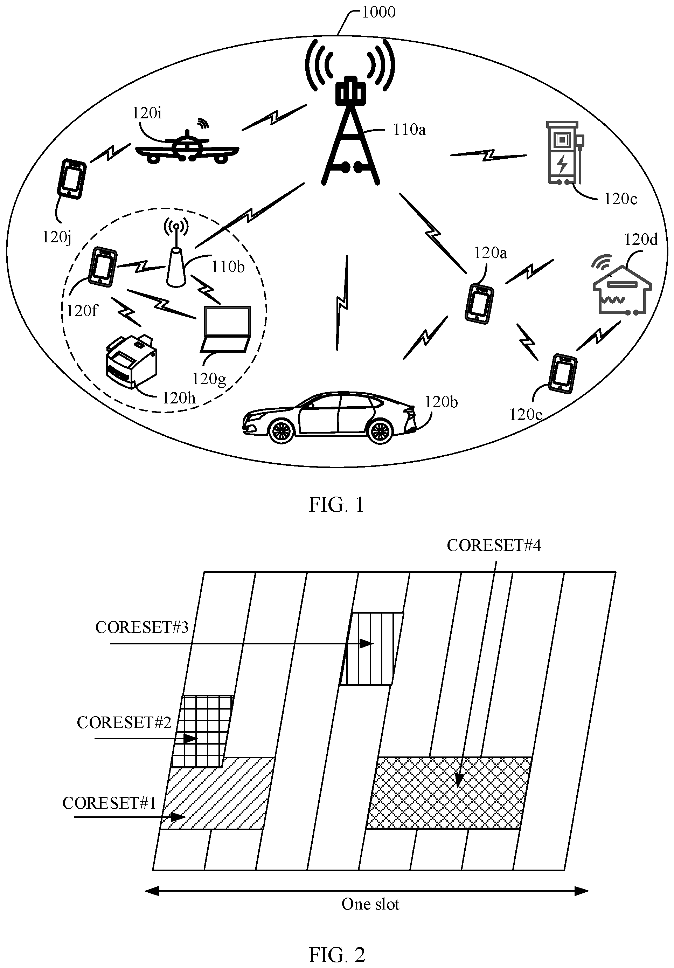

FIG. 1 is a diagram of an architecture of a communication system 1000 to which an embodiment of this application is applied. As shown in FIG. 1, the communication system 1000 includes at least one network device (for example, 110a and 110b in FIG. 1) and at least one terminal device (for example, 120a to 120j in FIG. 1). The terminal device may communicate with the network device in a wireless manner. Optionally, different network devices may communicate with each other. Optionally, different terminal devices may communicate with each other.

It should be noted that FIG. 1 is merely a diagram. The communication system 1000 may further include another network device, although not shown. For example, the communication system 1000 may further include one or more of a core network (core network, CN) device, a wireless relay device, and a wireless backhaul device. This is not specifically limited herein.

The network device may be connected to the core network device in a wireless or wired manner. The core network device and the network device may be different physical devices independent of each other, or functions of the core network device and logical functions of the network device may be integrated into a same physical device, or some functions of the core network device and some functions of the network device may be integrated into one physical device. This is not specifically limited in embodiments of this application.

Optionally, the network device is a network side device having a wireless transceiver function. The network device may be an apparatus that is in a radio access network (radio access network, RAN) and that provides a wireless communication function for the terminal device, and is referred to as a RAN device. The RAN may be an access network in the 3rd generation partnership project (3rd generation partnership project, 3GPP), for example, a 4G network, a 5G network, or a future-oriented 6G network. The RAN may alternatively be an open access network (open RAN, O-RAN, or ORAN), a cloud radio access network (cloud radio access network, CRAN), or a communication network of two or more of the foregoing networks. The RAN device may be a base station (base station), an evolved NodeB (evolved NodeB, eNodeB), a transmission reception point (transmission reception point, TRP), a next generation NodeB (next generation NodeB, gNB) in the 5th generation (5th generation, 5G) mobile communication system, a next generation NodeB in the 6th generation (6th generation, 6G) mobile communication system, a base station in a future mobile communication system, a wireless fidelity (wireless fidelity, Wi-Fi) system, a long range radio (long range radio, LoRa) system, or an access node in an Internet of Vehicles system. The RAN device may alternatively be a module or unit that completes some functions of a base station, for example, may be a central unit (central unit, CU), or may be a distributed unit (distributed unit, DU), or may be a radio unit (radio unit, RU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to related technical specifications of the 3rd generation partnership project (3rd generation partnership project, 3GPP). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may also have different names, but a person skilled in the art may understand meanings thereof. For example, in an ORAN system, the CU may also be referred to as an O-CU (open CU), the DU may also be referred to as an O-DU, and the RU may also be referred to as an O-RU. Any one of the CU (or the CU-CP or the CU-UP), the DU, and the RU in this application may be implemented by using a software module, a hardware module, or a combination of a software module and a hardware module. The radio access network device may be a macro base station (for example, 110a in FIG. 1), or may be a micro base station or an indoor base station (for example, 110b in FIG. 1), or may be a relay node or a donor node. A specific technique and a specific device form factor that are used by the radio access network device are not limited in embodiments of this application. For ease of description, the network device is used as an abbreviation of the radio access network device, and the base station is used as an example of the radio access network device.

Optionally, the terminal device accesses a core network via the network device. The terminal device includes a device that provides voice and/or data connectivity for users, specifically including a device that provides voice for users, or a device that provides data connectivity for users, or a device that provides both voice and data connectivity for users, for example, may include a handheld device with a wireless connection function, or a processing device connected to a wireless modem. The terminal device may communicate with the core network through the radio access network, and exchange voice or data with the RAN or exchange voice and data with the RAN. The terminal device may include user equipment (user equipment, UE), a wireless terminal device, a mobile terminal device, a D2D terminal device, a V2X terminal device, a machine-to-machine/machine-type communication (machine-to-machine/machine-type communication, M2M/MTC) terminal device, an Internet of Things (Internet of Things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (also referred to as a "cellular" phone), a computer having a mobile terminal device, or a portable, pocket-sized, handheld, or computer-embedded mobile apparatus, such as a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may further include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

If the various terminal devices described above are located in a vehicle (for example, placed in the vehicle or mounted in the vehicle), the terminal devices may be all considered as on-board terminal devices. For example, the on-board terminal device is also referred to as an on-board unit (on-board unit, OBU).

In embodiments of this application, the terminal device may further include a relay (relay). Alternatively, it is understood that any device that can perform data communication with the base station may be considered as the terminal device.

In an embodiment of this application, an apparatus configured to implement a function of the terminal device may be a terminal device, or may be an apparatus that can support the terminal device in implementing the function, for example, a chip system. The apparatus may be mounted in the terminal device. In an embodiment of this application, the chip system may include a chip, or may include a chip and another discrete component. In the technical solutions provided in embodiments of this application, an example in which an apparatus configured to implement a function of a terminal is a terminal device is used for description.

It should be understood that the network device and the terminal device may be at fixed positions, or may be movable. The network device and the terminal device may be deployed on land, including an indoor or outdoor device, a handheld or on-board device; or may be deployed on water; or may be deployed on an airplane, a balloon, and an artificial satellite in the air. Application scenarios of the network device and the terminal device are not limited in embodiments of this application.

Roles of the network device and the terminal device may be relative. For example, a helicopter or an unmanned aerial vehicle 120i in FIG. 1 may be configured as a mobile base station. For the terminal device 120j that accesses a radio access network via 120i, the terminal device 120i is a network device. However, for the network device 110a, 120i is a terminal device. In other words, 110a and 120i communicate with each other by using a radio air interface protocol. Certainly, 110a and 120i may alternatively communicate with each other by using an interface protocol between base stations. In this case, for 110a, 120i is also a network device. Therefore, the network device and the terminal device may be collectively referred to as a communication apparatus. 110a and 110b in FIG. 1 may be referred to as a communication apparatus having a function of a network device, and 120a to 120j in FIG. 1 may be referred to as a communication apparatus having a function of a terminal device.

Communication may be performed between the network device and the terminal device, between the network devices, and between the terminal devices by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, the function of the network device may be performed by a module (for example, a chip) in the network device, or may be performed by a control subsystem including the function of the network device. The control subsystem including the function of the network device may be a control center in the foregoing application scenarios such as a smart grid, industrial control, intelligent transportation, and a smart city. The function of the terminal device may be performed by a module (for example, a chip or a modem) in the terminal device, or may be performed by an apparatus including the function of the terminal device.

In embodiments of this application, the network device sends a downlink signal or downlink information to the terminal device, where the downlink information is carried on a downlink channel; and the terminal device sends an uplink signal or uplink information to the network device, where the uplink information is carried on an uplink channel. To communicate with the network device, the terminal device needs to establish a wireless connection with a cell controlled by the network device. The cell establishing the wireless connection with the terminal device is referred to as a serving cell of the terminal device. When the terminal device communicates with the serving cell, the terminal device is further affected by a signal from a neighboring cell.

It should be noted that the solutions in embodiments of this application may be further applied to another communication system, and a corresponding name may be replaced with a name of a corresponding function in the another communication system.

For ease of understanding embodiments of this application, the following first briefly describes terms in embodiments of this application. It should be understood that these descriptions are merely for ease of understanding embodiments of this application, and should not constitute any limitation on this application.

### 1. PDCCH

Same as a long term evolution (long term evolution, LTE) communication system, an NR communication system defines a PDCCH for transmission of downlink control information (downlink control information, DCI).

For a terminal device, the terminal device may perform blind detection on a candidate PDCCH from a network device (for example, a base station) in one or more search space sets (search space set, SS set).

The SS set can indicate a start symbol and a periodicity of a PDCCH in time domain. The SS set may be understood as a set of candidate PDCCHs that need to be detected by the terminal device. The SS set is classified into a common search space set (common search space set, CSS set) and a user search space set (user search space set, USS set).

For a PDCCH, different from the LTE communication system, the NR communication system introduces the concept of a control resource set (control resource set, CORESET). The CORESET can indicate a frequency band occupied by the PDCCH in frequency domain and a quantity of symbols occupied by the PDCCH in time domain. The CORESET may be understood as a time-frequency resource used when the terminal device detects a candidate PDCCH by using one or more SS sets. For example, a CORESET includes ${N}_{RB}^{CORESET}$ resource blocks (resource block, RB) in frequency domain and ${N}_{symb}^{CORESET} ∈ \left\{1, 2, 3\right\}$ consecutive symbols in time domain.The CORESET may be at any time-frequency location of a bandwidth part (bandwidth part, BWP), and be semi-statically configured by a network device side through higher layer signaling. One or more CORESETs may be configured for each terminal device, as shown in FIG. 2.

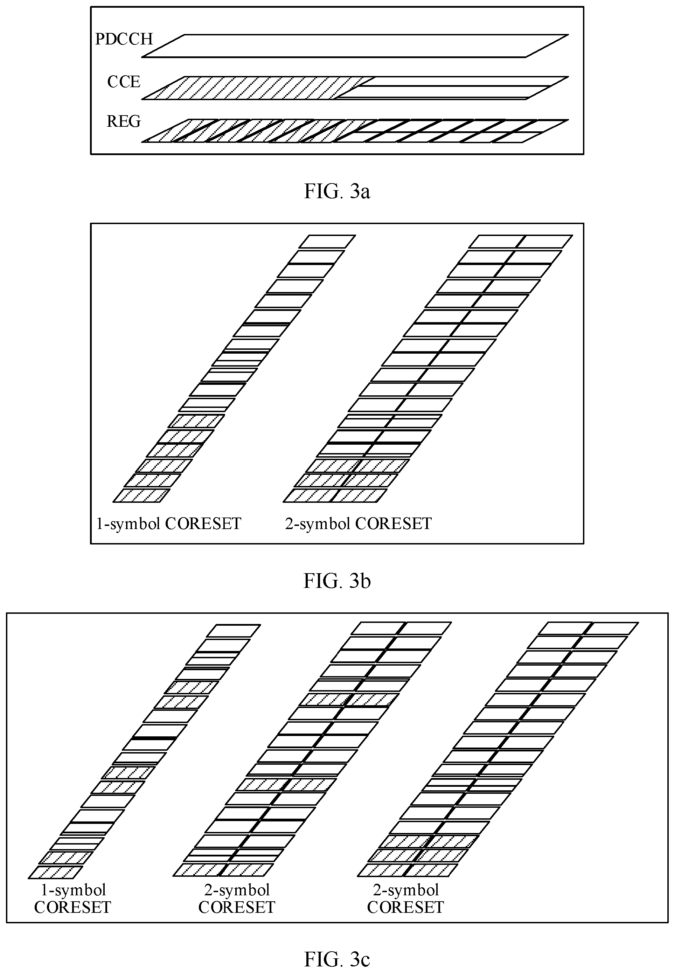

A time-frequency resource used by a PDCCH is formed by aggregating one or more control channel elements (control channel element, CCE) in a CORESET, as shown in FIG. 3a. The CCE may also be referred to as an aggregation level (aggregation level, AL).

Currently, the PDCCH AL supported by the NR communication system includes 1, 2, 4, 8, and 16. A CCE is formed by six resource element groups (resource element groups, REGs), and each REG occupies one symbol in time domain and occupies one RB in frequency domain. One RB includes 12 subcarriers in frequency domain. In other words, each REG includes 12 resource elements (resource elements, REs).

For a CORESET, there are two manners of CCE-to-REG mapping: interleaved mapping (interleaved mapping) and non-interleaved mapping (non-interleaved mapping). Non-interleaved mapping is shown in FIG. 3b, and interleaved mapping is shown in FIG. 3c.

In this application, a symbol may be an orthogonal frequency division multiplexing (orthogonal frequency division multiplexing, OFDM) symbol, and is the smallest time unit in time domain in an OFDM system.

### 2. PDCCH demodulation reference signal (demodulation reference signal, DMRS)

Usually, channel estimation needs to be performed when a terminal device processes a received PDCCH. Therefore, an NR communication system introduces a PDCCH-specific DMRS that may be described as a DMRS of a PDCCH or a PDCCH DMRS. The introduction of the PDCCH DMRS enables a network device to transmit the PDCCH through beamforming. Therefore, PDCCH coverage and performance are improved.

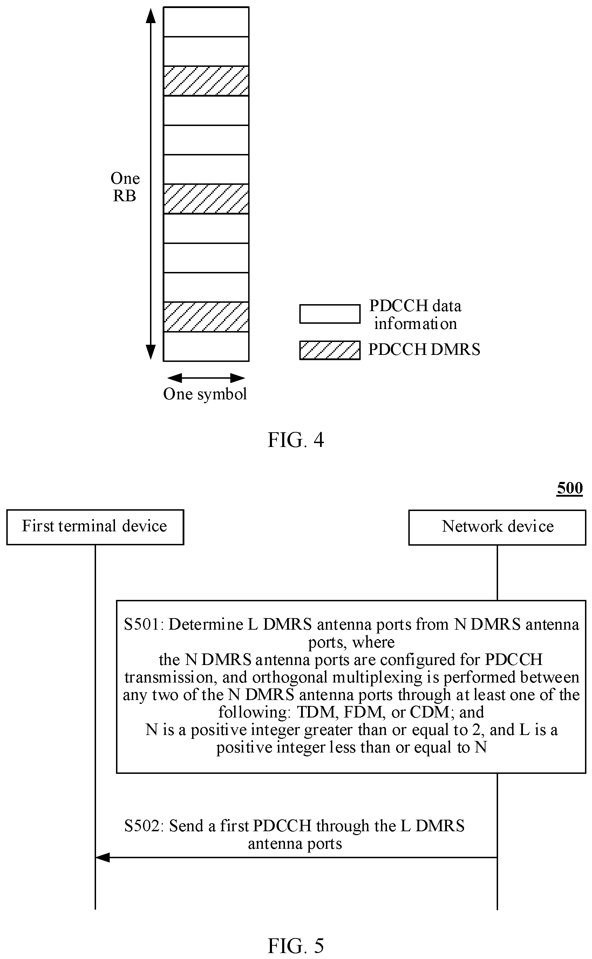

For example, the DMRS of the PDCCH is sent by using a pseudo-random sequence. For a candidate PDCCH, in a REG occupied by the candidate PDCCH, a DMRS of the PDCCH is mapped to some subcarriers of the REG, for example, a fourth subcarrier in every four subcarriers, as shown in FIG. 4. Therefore, the overhead of the DMRS of the PDCCH is 1/4. In other words, each REG has three REs for data information transmission.

In this application, an RE for carrying a DMRS may be denoted as a DMRS RE.

### 3. PDCCH data information

PDCCH data information may be understood as DCI carried on the PDCCH, and may be denoted as PDCCH Data.

It should be noted that, in this application, a PDCCH includes two parts: data information of the PDCCH and a DMRS of the PDCCH.

### 4. Antenna port

An antenna port is a logical port for signal transmission, and one antenna port may correspond to one or more physical antennas. Different antenna ports may correspond to a same physical antenna, or may correspond to different physical antennas. From the perspective of a receive end, each antenna port corresponds to an independent radio channel. In the 3GPP NR standard, an antenna port is defined as an antenna port for reference signal transmission, which may be referred to as a reference signal antenna port for short. For example, an antenna port for DMRS transmission may be referred to as a DMRS antenna port (DMRS port) for short.

It should be noted that, in this application, an antenna port is a DMRS antenna port.

In addition, an antenna port is also referred to as a port for short. For example, a DMRS antenna port may also be referred to as a DMRS port for short.

### 5. Antenna port supported by a PDCCH

Using an NR communication system as an example, a PDCCH supports only a single antenna port with a port number 2000. In this way, a DMRS of the PDCCH also supports only one antenna port, that is, a single DMRS antenna port.

Usually, in a multiple-input multiple-output (multiple-input multiple-output, MIMO) transmission scenario, because a PDCCH supports only a single antenna port, PDCCH transmission supports only single-stream transmission.

In an MU-MIMO transmission scenario with a plurality of PDCCHs, a network device employs a processing method transparent to terminal devices, that is, transmits PDCCHs for a plurality of terminal devices by using a same DMRS antenna port. In other words, the network device transmits the PDCCHs for the plurality of terminal devices on a same time-frequency resource by using the same DMRS antenna port. In this case, DMRSs on the plurality of PDCCHs may not be guaranteed to be orthogonal, resulting in poor PDCCH demodulation performance. In addition, when there are a large number of users in a cell, PDCCH capacity may be limited, affecting PDCCH performance.

In conclusion, in NR, a PDCCH supports only a single antenna port. When MU-MIMO is used for a plurality of PDCCHs for transmission, because DMRSs on the plurality of PDCCHs are transmitted by using a same antenna port, the DMRSs may not be guaranteed to be orthogonal. Consequently, PDCCH demodulation performance is limited, and PDCCH capacity is also affected.

In view of this, this application provides a communication method. The method may be applied to the system shown in FIG. 1. The method includes: A network device determines L DMRS antenna ports from N DMRS antenna ports. The N DMRS antenna ports are configured for PDCCH transmission, and orthogonal multiplexing is performed between any two of the N DMRS antenna ports through at least one of the following: time division multiplexing (time division multiplexing, TDM), frequency division multiplexing (frequency division multiplexing, FDM), or code division multiplexing (code division multiplexing, CDM). N is a positive integer greater than or equal to 2, and L is a positive integer less than or equal to N. The network device sends a DMRS of a first PDCCH through the L DMRS antenna ports.

In this application, TDM between any two DMRS antenna ports means that different DMRS antenna ports are associated with or use different time-domain resources. In this way, PDCCH DMRSs transmitted on different DMRS antenna ports may use different time-domain resources, thereby ensuring that DMRSs of different PDCCHs are mutually orthogonal.

In this application, FDM between any two DMRS antenna ports means that different DMRS antenna ports are associated with or use different frequency-domain resources. In this way, PDCCH DMRSs transmitted on different DMRS antenna ports may use different frequency-domain resources, thereby ensuring that DMRSs of different PDCCHs are mutually orthogonal.

In this application, CDM between any two DMRS antenna ports means that different DMRS antenna ports are associated with or use different orthogonal codes (orthogonal cover codes described below). In this way, PDCCH DMRSs transmitted on different DMRS antenna ports may use different orthogonal codes, thereby ensuring that DMRSs of different PDCCHs are mutually orthogonal.

In this way, because the N DMRS antenna ports can be configured for PDCCH transmission, and the N DMRS antenna ports are mutually orthogonal, when different PDCCH DMRSs are transmitted through different DMRS antenna ports in the N DMRS antenna ports, DMRSs of different PDCCHs are mutually orthogonal. For example, the DMRS of the first PDCCH is orthogonal to a DMRS of another PDCCH, helping improve PDCCH demodulation performance and PDCCH capacity.

With reference to FIG. 5, the following describes in detail a communication method according to an embodiment of this application.

A communication method 500 provided in an embodiment of this application includes the following operations.

S501: A network device determines L DMRS antenna ports from N DMRS antenna ports.

The network device is described as follows.

The step may be performed by a network device. Unless otherwise specified, the "network device" in this application may be the network device itself, or may be a component (such as a processor, a chip, or a chip system) in the network device, or may be a logic module or software that can implement all or some functions of the network device.

The L DMRS antenna ports are described as follows.

L is a positive integer less than or equal to N. To be specific, the L DMRS antenna ports are one or more of the N DMRS antenna ports.

The N DMRS antenna ports are described as follows.

N is a positive integer greater than or equal to 2. To be specific, the N DMRS antenna ports are two or more DMRS antenna ports.

First, the N DMRS antenna ports are configured for PDCCH transmission, and may be denoted as PDCCH DMRS antenna ports. In other words, the PDCCH supports a plurality of antenna ports.

Second, orthogonal multiplexing is performed between any two of the N DMRS antenna ports through at least one of the following: TDM, FDM, or CDM.

For example, orthogonal multiplexing is performed between any two of the N DMRS antenna ports through CDM. In another example, orthogonal multiplexing is performed between any two of the N DMRS antenna ports through CDM and FDM.

The following describes two implementations (a first implementation and a second implementation below).

First implementation: FDM between data information of a PDCCH and a DMRS of the PDCCH.

First, the overhead of the DMRS of the PDCCH is described.

In the first implementation, a transmission resource of the first PDCCH includes a plurality of REGs, each of the plurality of REGs includes M first REs, the M first REs are configured to carry a DMRS of a PDCCH, and M is a positive integer greater than 3. Each of the plurality of REGs includes one OFDM symbol in time domain and one RB in frequency domain. For details, refer to descriptions in the term explanation part. Details are not described again.

It should be understood that, in this application, each REG includes a plurality of REs (for example, 12 REs), and an RE for carrying a PDCCH DMRS in the plurality of REs is described as a first RE. In addition to the M first REs, each REG may further include another RE, for example, an RE that carries data information of the PDCCH.

In this application, it is considered that an orthogonal cover code (orthogonal cover code, OCC) is used for a DMRS antenna port in frequency domain, and a length of the OCC is usually an even number. Therefore, in this application, a quantity of REs for carrying the DMRS in an REG is an even number. In addition, in consideration of DMRS overheads and DMRS performance, the overhead of the DMRS is preferentially considered as 1/3, that is, M = 4. In other words, four first REs in each REG are configured to carry the DMRS of the PDCCH.

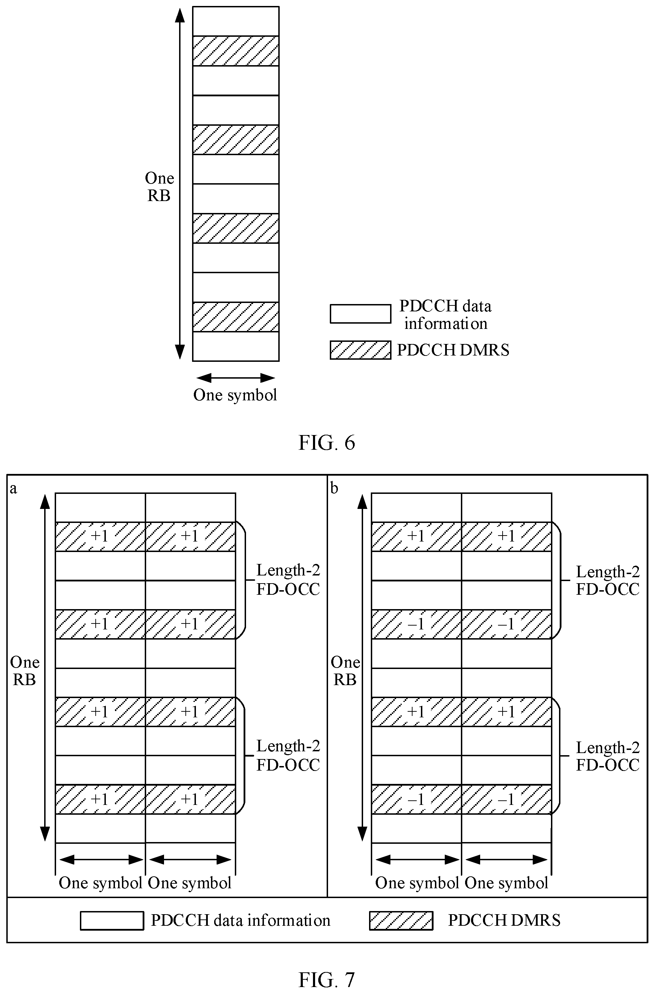

FIG. 6 is used as an example. FIG. 6 shows distribution of data information and a DMRS of a PDCCH on one REG. An RE for carrying the data information is shown by a blank grid. An RE for carrying the DMRS is shown by a grid filled with diagonal lines.

It should be understood that M may be another value, for example, M = 6. This is not limited in this application.

It should be noted that the meaning of the OCC is described as follows.

A DMRS of a PDCCH is sent by using a pseudo-random sequence. An orthogonal sequence may be further superimposed on the pseudo-random sequence, to support a plurality of orthogonal DMRS antenna ports. The pseudo-random sequence may be referred to as a base sequence, and the orthogonal sequence is referred to as an OCC. The OCC may also have another description, for example, an OCC sequence. This is not limited in this application.

The OCC includes a time domain-OCC and a frequency domain-OCC. The time domain-OCC may be understood as an OCC used in time domain, which may be denoted as a TD-OCC, that is, time domain-OCC. The frequency domain-OCC may be understood as an OCC used in frequency domain, which may be denoted as an FD-OCC, that is, frequency domain-OCC.

It should be noted that the length of the OCC is described as follows.

An OCC whose length is 2 may be understood as that the OCC has two elements. For example, the OCC whose length is 2 may include sequences in Table 1:

**Table 1**

| Sequence number (n) | OCC sequence |
|---|---|
| 1 | [+1 + 1] |
| 2 | [+1 - 1] |

An OCC whose length is 4 may be understood as that the OCC has four elements. For example, the OCC whose length is 4 may include sequences in Table 2:

**Table 2**

| Sequence number (n) | OCC sequence |
|---|---|
| 1 | [+1 + 1 + 1 + 1] |
| 2 | [+1 - 1 + 1 - 1] |
| 3 | [+1 + 1 - 1 - 1] |
| 4 | [+1 - 1 - 1 + 1] |

In this application, a time domain-OCC whose length is 2 may be denoted as a length-2 TD-OCC; a time domain-OCC whose length is 4 may be denoted as a length-4 TD-OCC; a frequency domain-OCC whose length is 2 may be denoted as a length-2 FD-OCC; and a frequency domain-OCC whose length is 4 may be denoted as a length-4 FD-OCC.

In the first implementation, in a first option (option1), orthogonal multiplexing is performed between any two of the N DMRS antenna ports through CDM. For example, any two of the N DMRS antenna ports are associated with (or use) different frequency domain-OCCs and/or different time domain-OCCs. In other words, the N DMRS antenna ports are associated with (or use) a same time-frequency resource, and are associated with (or use) different time domain-OCCs and/or different frequency domain-OCCs to keep orthogonal.

For example, any two of the N DMRS antenna ports are associated with (or use) different frequency domain-OCCs. Based on a length of an associated (or used) frequency domain-OCC, there may be the following examples (Example 1 and Example 2).

Example 1: Associated frequency domain-OCC whose length is 2.

Four first REs in an REG are configured to carry the DMRS (that is, four DMRS REs). Therefore, for a same DMRS antenna port, the first two DMRS REs and the last two DMRS REs are both associated with a same OCC whose length is 2. In this case, a total of two DMRS antenna ports are supported, that is, N = 2.

As shown in FIG. 7, each small grid in FIG. 7 indicates an RE. The N DMRS antenna ports are separately denoted as a DMRS antenna port 0 and a DMRS antenna port 1. In FIG. 7, the DMRS antenna port 0 and the DMRS antenna port 1 are associated with different frequency domain-OCCs to keep orthogonal.

In FIG. 7, a block in which the letter a is located shows the frequency domain-OCC associated with the DMRS antenna port 0. The frequency domain-OCC associated with the DMRS antenna port 0 is [+1, +1].

In FIG. 7, a block in which the letter b is located shows the frequency domain-OCC associated with the DMRS antenna port 1. The frequency domain-OCC associated with the DMRS antenna port 1 is [+1, -1].

It should be noted that, in FIG. 7, the block in which the letter a is located and the block in which the letter b is located actually correspond to a same time-frequency resource. For ease of description, how to perform code division multiplexing for different DMRS antenna ports in a same time-frequency resource is provided.

Example 2: Associated frequency domain-OCC whose length is 4.

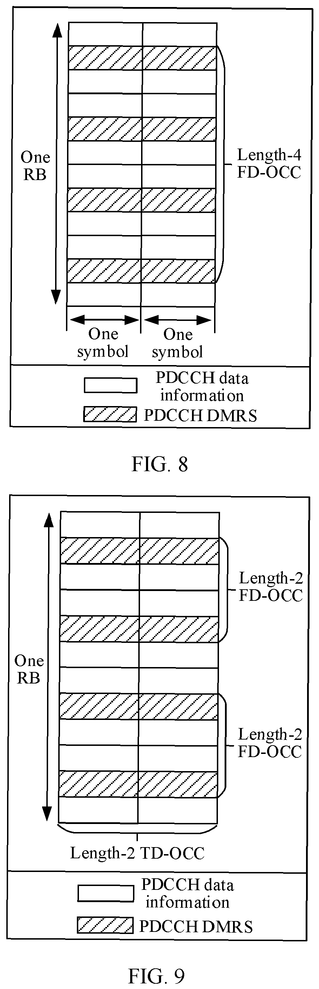

Four first REs in an REG are configured to carry the DMRS (that is, four DMRS REs). Therefore, for a same DMRS antenna port, the four DMRS REs are associated with an OCC whose length is 4, as shown in FIG. 8. In this case, a total of four DMRS antenna ports are supported, that is, N = 4.

Specifically, the four DMRS antenna ports are separately denoted as a DMRS antenna port 0 to a DMRS antenna port 3. The four DMRS antenna ports are associated with different frequency domain-OCCs to keep orthogonal.

For example, the frequency domain-OCC associated with the DMRS antenna port 0 is [+1, +1, +1, +1]; the frequency domain-OCC associated with the DMRS antenna port 1 is [+1, - 1, +1, -1]; the frequency domain-OCC associated with the DMRS antenna port 2 is [+1, +1, -1, - 1]; and the frequency domain-OCC associated with the DMRS antenna port 3 is [+1, -1, -1, +1].

It should be understood that, for Example 1, when a quantity of time-domain symbols of the PDCCH is an even number (for example, 2 or 4), the frequency domain-OCC may be replaced with a time domain-OCC. For Example 2, when a quantity of time-domain symbols of the PDCCH is an even number (for example, 4), the frequency domain-OCC may be replaced with a time domain-OCC.

In another example, orthogonal multiplexing is performed between any two of the N DMRS antenna ports through different frequency domain-OCCs and time domain-OCCs. Based on a length of an associated (or used) frequency domain-OCC, there may be the following implementations (Example 3 to Example 6).

Example 3: Associated frequency domain-OCC whose length is 2 and time domain-OCC whose length is 2.

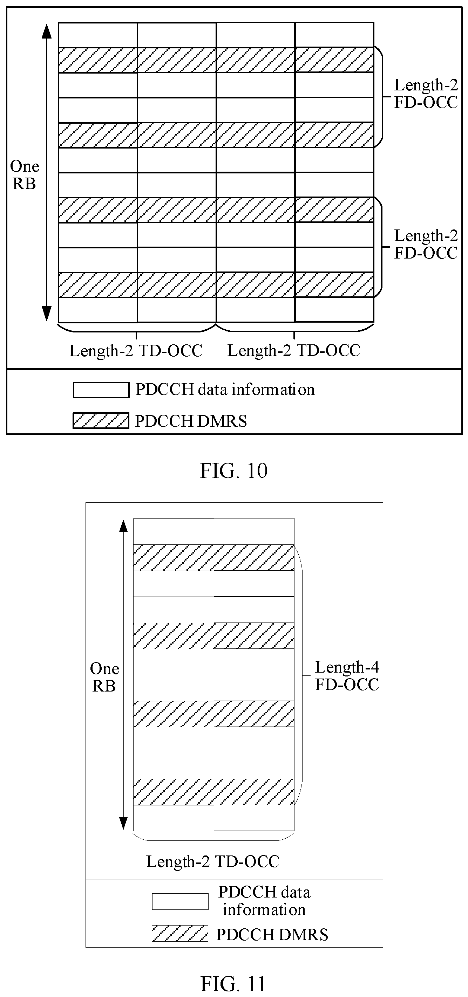

Each of the N DMRS antenna ports is associated with a time domain-OCC whose length is 2 and a frequency domain-OCC whose length is 2, to perform weighted processing. In this case, a total of four DMRS antenna ports are supported, that is, N = 4. For example, when a quantity of time-domain symbols of the PDCCH is 2, time domain-OCCs and frequency domain-OCCs that are associated with different DMRS antenna ports are shown in FIG. 9. In another example, when a quantity of time-domain symbols of the PDCCH is 4, time domain-OCCs and frequency domain-OCCs that are associated with different DMRS antenna ports are shown in FIG. 10.

Specifically, the four DMRS antenna ports are separately denoted as a DMRS antenna port 0 to a DMRS antenna port 3. The four DMRS antenna ports are associated with the frequency domain-OCC whose length is 2 and the time domain-OCC whose length is 2 to keep orthogonal.

For example, the time domain-OCC associated with the DMRS antenna port 0 is [+1, +1], and the frequency domain-OCC associated with the DMRS antenna port 0 is [+1, +1]; the time domain-OCC associated with the DMRS antenna port 1 is [+1, -1], and the frequency domain-OCC associated with the DMRS antenna port 1 is [+1, +1]; the time domain-OCC associated with the DMRS antenna port 2 is [+1, +1], and the frequency domain-OCC associated with the DMRS antenna port 2 is [+1, -1]; and the time domain-OCC associated with the DMRS antenna port 3 is [+1, -1], and the frequency domain-OCC associated with the DMRS antenna port 3 is [+1, -1].

Example 4: Associated frequency domain-OCC whose length is 4 and time domain-OCC whose length is 2.

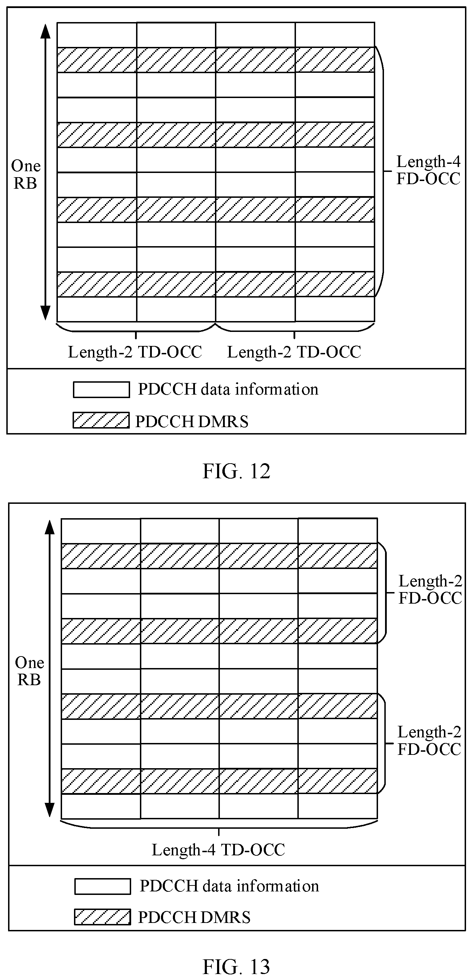

Each of the N DMRS antenna ports is associated with a time domain-OCC whose length is 2 and a frequency domain-OCC whose length is 4, to perform weighted processing. In this case, a total of eight DMRS antenna ports are supported, that is, N = 8. For example, when a quantity of time-domain symbols of the PDCCH is 2, time domain-OCCs and frequency domain-OCCs that are associated with different DMRS antenna ports are shown in FIG. 11. In another example, when a quantity of time-domain symbols of the PDCCH is 4, time domain-OCCs and frequency domain-OCCs that are associated with different DMRS antenna ports are shown in FIG. 12.

Specifically, the eight DMRS antenna ports are separately denoted as a DMRS antenna port 0 to a DMRS antenna port 7. The eight DMRS antenna ports are associated with the frequency domain-OCC whose length is 4 and the time domain-OCC whose length is 2 to keep orthogonal.

For example, the time domain-OCC associated with the DMRS antenna port 0 is [+1, +1], and the frequency domain-OCC associated with the DMRS antenna port 0 is [+1, +1, +1, +1]; the time domain-OCC associated with the DMRS antenna port 1 is [+1, -1], and the frequency domain-OCC associated with the DMRS antenna port 1 is [+1, +1, +1, +1]; the time domain-OCC associated with the DMRS antenna port 2 is [+1, +1], and the frequency domain-OCC associated with the DMRS antenna port 2 is [+1, -1, +1, -1]; the time domain-OCC associated with the DMRS antenna port 3 is [+1, -1], and the frequency domain-OCC associated with the DMRS antenna port 3 is [+1, -1, +1, -1]; the time domain-OCC associated with the DMRS antenna port 4 is [+1, +1], and the frequency domain-OCC associated with the DMRS antenna port 4 is [+1, +1, -1, -1]; the time domain-OCC associated with the DMRS antenna port 5 is [+1, -1], and the frequency domain-OCC associated with the DMRS antenna port 5 is [+1, +1, -1, -1]; the time domain-OCC associated with the DMRS antenna port 6 is [+1, +1], and the frequency domain-OCC associated with the DMRS antenna port 6 is [+1, -1, -1, +1]; and the time domain-OCC associated with the DMRS antenna port 7 is [+1, -1], and the frequency domain-OCC associated with the DMRS antenna port 7 is [+1, -1, -1, +1].

Example 5: Associated frequency domain-OCC whose length is 2 and time domain-OCC whose length is 4.

Each of the N DMRS antenna ports is associated with a frequency domain-OCC whose length is 2 and a time domain-OCC whose length is 4, to perform weighted processing. In this case, a total of eight DMRS antenna ports are supported, that is, N = 8. For example, when a quantity of time-domain symbols of the PDCCH is 4, frequency domain-OCCs and time domain-OCCs that are associated with different DMRS antenna ports are shown in FIG. 13.

Specifically, the eight DMRS antenna ports are separately denoted as a DMRS antenna port 0 to a DMRS antenna port 7. The eight DMRS antenna ports are associated with the time domain-OCC whose length is 4 and the frequency domain-OCC whose length is 2 to keep orthogonal.

For example, the frequency domain-OCC associated with the DMRS antenna port 0 is [+1, +1], and the time domain-OCC associated with the DMRS antenna port 0 is [+1, +1, +1, +1]; the frequency domain-OCC associated with the DMRS antenna port 1 is [+1, -1], and the time domain-OCC associated with the DMRS antenna port 1 is [+1, +1, +1, +1]; the frequency domain-OCC associated with the DMRS antenna port 2 is [+1, +1], and the time domain-OCC associated with the DMRS antenna port 2 is [+1, -1, +1, -1]; the frequency domain-OCC associated with the DMRS antenna port 3 is [+1, -1], and the time domain-OCC associated with the DMRS antenna port 3 is [+1, -1, +1, -1]; the frequency domain-OCC associated with the DMRS antenna port 4 is [+1, +1], and the time domain-OCC associated with the DMRS antenna port 4 is [+1, +1, -1, -1]; the frequency domain-OCC associated with the DMRS antenna port 5 is [+1, -1], and the time domain-OCC associated with the DMRS antenna port 5 is [+1, +1, -1, -1]; the frequency domain-OCC associated with the DMRS antenna port 6 is [+1, +1], and the time domain-OCC associated with the DMRS antenna port 6 is [+1, -1, -1, +1]; and the frequency domain-OCC associated with the DMRS antenna port 7 is [+1, -1], and the time domain-OCC associated with the DMRS antenna port 7 is [+1, -1, -1, +1].

Example 6: Associated frequency domain-OCC whose length is 4 and time domain-OCC whose length is 4.

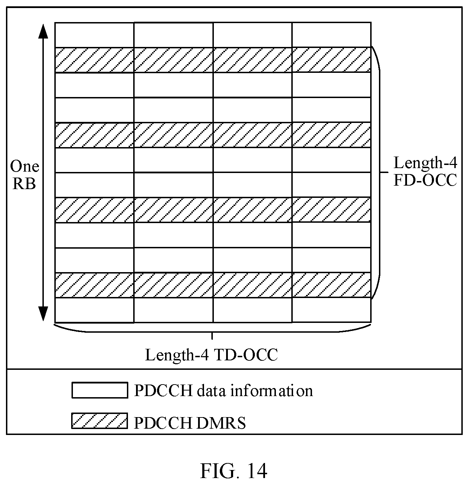

Each of the N DMRS antenna ports is associated with a frequency domain-OCC whose length is 4 and a time domain-OCC whose length is 4, to perform weighted processing. In this case, a total of 16 DMRS antenna ports are supported, that is, N = 16. For example, when a quantity of time-domain symbols of the PDCCH is 4, frequency domain-OCCs and time domain-OCCs that are associated with different DMRS antenna ports are shown in FIG. 14.

Specifically, the 16 DMRS antenna ports are separately denoted as a DMRS antenna port 0 to a DMRS antenna port 15. The 16 DMRS antenna ports are associated with the time domain-OCC whose length is 4 and the frequency domain-OCC whose length is 4 to keep orthogonal.

In the first implementation, in a second option (option2), orthogonal multiplexing is performed between any two of the N DMRS antenna ports through CDM and/or FDM. For example, the N DMRS antenna ports belong to at least two CDM groups, and each of the at least two CDM groups includes some of the N DMRS antenna ports. Any two DMRS antenna ports in any one of the at least two CDM groups are associated with different frequency domain-OCCs and/or different time domain-OCCs. DMRS antenna ports included in any two of the at least two CDM groups are associated with different frequency-domain resources.

It should be noted that, in this application, DMRS antenna ports that occupy a same time-frequency resource and that are associated with time domain-OCCs and/or frequency domain-OCCs to keep orthogonal belong to one CDM group, and DMRS antenna ports that occupy different time-frequency resources belong to different CDM groups. Quantities of DMRS antenna ports included in different CDM groups may be the same or may be different. An example in which quantities of DMRS antenna ports included in different CDM groups are the same is used below for description. This should not be construed as a limitation on this application.

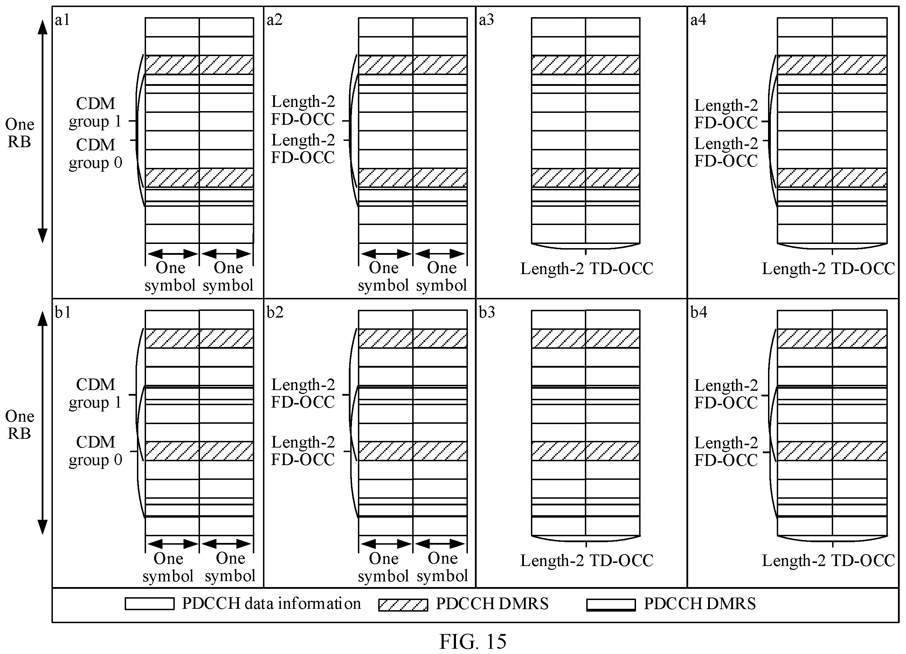

In this application, four DMRS REs in each REG may be classified into two CDM groups (CDM group), and each CDM group includes two DMRS REs, as shown in blocks in which 'a1' and 'b1' are located in FIG. 15.

Preferably, two CDM groups are used as an example. It is considered that different frequency domain-OCCs are associated to keep different DMRS antenna ports in a same CDM group orthogonal. Specifically, each CDM group may be associated with a frequency domain-OCC whose length is 2, as shown in blocks in which 'a2' and 'b2' are located in FIG. 15. In this case, each CDM group includes two DMRS antenna ports, and two CDM groups support four DMRS antenna ports in total, that is, N = 4.

Preferably, two CDM groups are used as an example. It is considered that different time domain-OCCs are associated to keep different DMRS antenna ports in a same CDM group orthogonal. Specifically, when a quantity of time-domain symbols of the PDCCH is 2, each CDM group may be associated with a time domain-OCC whose length is 2, as shown in blocks in which 'a3' and 'b3' are located in FIG. 15. In this case, each CDM group includes two DMRS antenna ports, and two CDM groups support four DMRS antenna ports in total, that is, N = 4.

Preferably, two CDM groups are used as an example. It is considered that different time domain-OCCs and frequency domain-OCCs are associated to keep different DMRS antenna ports in a same CDM group orthogonal. Specifically, when a quantity of time-domain symbols of the PDCCH is 2, each CDM group may be associated with a time domain-OCC whose length is 2 and a frequency domain-OCC whose length is 2, as shown in blocks in which 'a4' and 'b4' are located in FIG. 15. In this case, a total of eight DMRS antenna ports are supported, that is, N = 8.

It is easy to understand that, in each CDM group, for time domain-OCCs and frequency domain-OCCs that are associated with different DMRS antenna ports, refer to the description in the 'first option of the first implementation'. Details are not described again.

Second implementation: TDM between data information of a PDCCH and a DMRS of the PDCCH. For example, a time-domain resource of the PDCCH includes K symbols, and the K symbols include a first symbol and a second symbol. The data information of the PDCCH occupies the first symbol, and the DMRS of the PDCCH occupies the second symbol. K is a positive integer greater than or equal to 2.

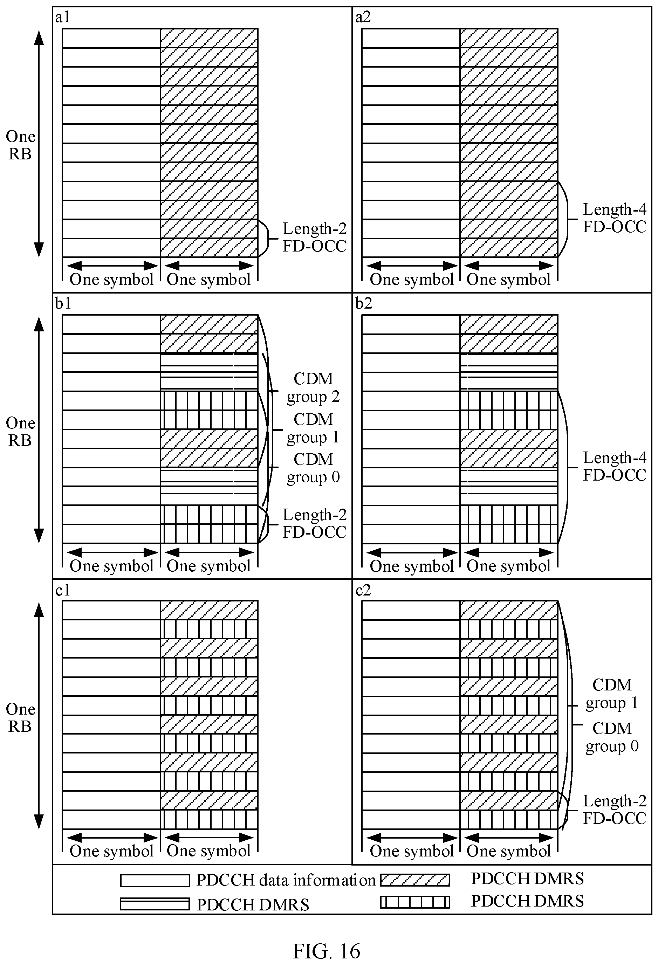

For example, in FIG. 16, K = 2. Data information of a PDCCH occupies a first symbol, as shown by a blank grid. A DMRS of the PDCCH occupies a second symbol, as shown by a grid that is filled. Certainly, the DMRS of the PDCCH may alternatively occupy more symbols, for example, two symbols or four symbols. This is not limited in this application.

In the second implementation, in a first option (option1), orthogonal multiplexing is performed between any two of the N DMRS antenna ports through CDM. For example, any two of the N DMRS antenna ports are associated with or use different frequency domain-OCCs and/or different time domain-OCCs. In other words, the N DMRS antenna ports occupy a same time-frequency resource, and are associated with different time domain-OCCs and/or different frequency domain-OCCs to keep orthogonal.

For example, any two of the N DMRS antenna ports are associated with or use different frequency domain-OCCs. Based on a length of an associated frequency domain-OCC, there may be the following example.

Each DMRS antenna port may be associated with a frequency domain-OCC whose length is 2, as shown in a block in which 'a1' is located in FIG. 16. In this case, a total of two DMRS antenna ports are supported, that is, N = 2.

Each DMRS antenna port may be associated with a frequency domain-OCC whose length is 4, as shown in a block in which 'a2' is located in FIG. 16. In this case, a total of four DMRS antenna ports are supported, that is, N = 4.

In another example, any two of the N DMRS antenna ports are associated with or use different time domain-OCCs. Based on a length of an associated time domain-OCC, there may be the following example.

When a quantity of time-domain symbols of a DMRS of the PDCCH is an even number (for example, 2 or 4), each DMRS antenna port may be associated with a time domain-OCC whose length is 2. In this case, a total of two DMRS antenna ports are supported, that is, N = 2.

When a quantity of time-domain symbols of a DMRS of the PDCCH is an even number (for example, 4), each DMRS antenna port may be associated with a time domain-OCC whose length is 4. In this case, a total of four DMRS antenna ports are supported, that is, N = 4.

In the second implementation, in a second option (option2), orthogonal multiplexing is performed between any two of the N DMRS antenna ports through CDM and/or FDM. For example, the N DMRS antenna ports belong to at least two CDM groups, and each of the at least two CDM groups includes some of the N DMRS antenna ports. Any two DMRS antenna ports in any one of the at least two CDM groups are associated with or use different frequency domain-OCCs and/or different time domain-OCCs. DMRS antenna ports included in any two of the at least two CDM groups are associated with different frequency-domain resources.

Three CDM groups are used as an example. DMRS antenna ports in each CDM group may each include four REs. It is considered that different frequency domain-OCCs are associated to keep different DMRS antenna ports in a same CDM group orthogonal. Each CDM group may be associated with a frequency domain-OCC whose length is 2, as shown in a block in which 'b1' is located in FIG. 16. In this case, a total of six DMRS antenna ports are supported, that is, N = 6.

Three CDM groups are used as an example. DMRS antenna ports in each CDM group may each include four REs. It is considered that different frequency domain-OCCs are associated to keep different DMRS antenna ports in a same CDM group orthogonal. Each CDM group may be associated with a frequency domain-OCC whose length is 4, as shown in a block in which 'b2' is located in FIG. 16. In this case, a total of 12 DMRS antenna ports are supported, that is, N = 12.

Two CDM groups are used as an example. DMRS antenna ports in each CDM group may each include six REs. It is considered that different frequency domain-OCCs are associated to keep different DMRS antenna ports in a same CDM group orthogonal. Each CDM group may be associated with a frequency domain-OCC whose length is 2, as shown in a block in which 'c2' is located in FIG. 16. In this case, a total of four DMRS antenna ports are supported, that is, N = 4.

Two CDM groups are used as an example. When a quantity of time-domain symbols of a DMRS of the PDCCH is an even number (for example, 2 or 4), each DMRS antenna port may be associated with a time domain-OCC whose length is 2 and associated with a frequency domain-OCC whose length is 2. In this case, a total of eight DMRS antenna ports are supported, that is, N = 8.

In the second implementation, in a third option (option3), orthogonal multiplexing is performed between any two of the N DMRS antenna ports through FDM. For example, any two of the N DMRS antenna ports are associated with or use different frequency-domain resources. For example, N = 3. A DMRS antenna port 0 occupies four REs, for example, the first, second, seventh, and eighth REs in each REG. A DMRS antenna port 1 occupies four REs, for example, the third, fourth, ninth, and tenth REs in each REG. A DMRS antenna port 2 occupies four REs, for example, the fifth, sixth, eleventh, and twelfth REs in each REG.

It should be understood that the foregoing two implementations (that is, the first implementation and the second implementation) are examples for describing the N DMRS antenna ports, and should not be construed as a limitation on this application. Certainly, there may be more combinations. In different combinations, N may have another value. For example, a value of N includes 2^{T} or 3*Q, where T and Q are positive integers.

For the network device, after determining the L DMRS antenna ports, the network device performs S502.

S502: The network device sends a first PDCCH to a first terminal device through the L DMRS antenna ports. Correspondingly, the first terminal device receives the first PDCCH from the network device through the L DMRS antenna ports.

The first terminal device is described as follows.

The step may be performed by a first terminal device. Unless otherwise specified, the "first terminal device" in this application may be the first terminal device itself, or may be a component (such as a processor, a chip, or a chip system) in the first terminal device, or may be a logic module or software that can implement all or some functions of the first terminal device.

For the L DMRS antenna ports, refer to the description of S501. Details are not described again.

The first PDCCH is described as follows.

The first PDCCH includes two parts: data information of the first PDCCH and a DMRS of the first PDCCH.

It should be understood that, for the DMRS of the first PDCCH, that the network device sends the DMRS of the first PDCCH to the first terminal device through the L DMRS antenna ports includes: The network device sends the DMRS of the first PDCCH to the first terminal device through the L DMRS antenna ports and at least one of a time-domain resource, a frequency-domain resource, or an OCC that is associated with the L DMRS antenna ports.

For the data information of the first PDCCH, that the network device sends the data information of the first PDCCH to the first terminal device through the L DMRS antenna ports only means that the network device sends the data information of the first PDCCH to the first terminal device through the L antenna ports for sending the DMRS of the first PDCCH, instead of sending the data information of the first PDCCH to the first terminal device through any one of the time-domain resource, the frequency-domain resource, and the OCC that is associated with the L DMRS antenna ports.

It should be understood that, when the network device performs S502, the PDCCH in the foregoing two implementations (that is, the first implementation and the second implementation) may be replaced with the first PDCCH.

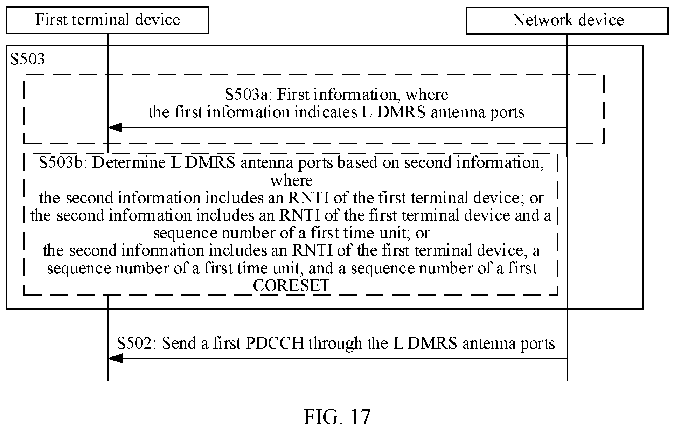

It is easy to understand that, for the first terminal device, as shown in FIG. 17, before performing S502, the first terminal device further performs S503.

S503: The first terminal device determines the L DMRS antenna ports.

For the L DMRS antenna ports, refer to the description of S501. Details are not described again.

S503 is described with reference to two implementations (a first implementation and a second implementation below).

In the first implementation, the communication method in this application includes the following step.

S503a: The network device sends first information to the first terminal device. Correspondingly, the first terminal device receives the first information from the network device.

The first information is described as follows.

The first information indicates the L DMRS antenna ports. For example, the first information includes port numbers of the L DMRS antenna ports.

In a possible implementation, the first information indicates the DMRS antenna port at the granularity of terminal devices. To be specific, the first information indicates the first terminal device to use the L DMRS antenna ports to detect the first PDCCH on a first SS set. The first SS set is all SS sets associated with all CORESETs of the first terminal device.

It may be understood that the L DMRS antenna ports are used for all PDCCH transmission of the first terminal device. In other words, the first terminal device monitors, by using the L DMRS antenna ports, the PDCCH on any SS set associated with any CORESET configured on the first terminal device.

In a possible implementation, the first information indicates the DMRS antenna port at the granularity of BWPs. To be specific, the first information indicates the first terminal device to use the L DMRS antenna ports to detect the first PDCCH on a second SS set. The second SS set is all SS sets associated with all CORESETs on a first BWP, and the first BWP is one of all BWPs of the first terminal device.

It may be understood that the L DMRS antenna ports are used for all PDCCH transmission of the first terminal device on a same BWP (for example, the first BWP), and DMRS antenna ports used for PDCCH transmission on different BWPs are independently configured, and may be the same or may be different. In other words, the first terminal device monitors, by using the L DMRS antenna ports, the PDCCH on all SS sets associated with all CORESETs associated with the first BWP.

In a possible implementation, the first information indicates the DMRS antenna port at the granularity of CORESETs. To be specific, the first information indicates the first terminal device to use the L DMRS antenna ports to detect the first PDCCH on a third SS set. The third SS set is all SS sets associated with a first CORESET, and the first CORESET is one of all CORESETs of the first terminal device.

It may be understood that the L DMRS antenna ports are used for all PDCCH transmission performed by the first terminal device by using a same CORESET, and DMRS antenna ports used for PDCCH transmission performed on different CORESETs are independently configured, and may be the same or may be different. In other words, the first terminal device monitors, by using the L DMRS antenna ports, the PDCCH on all SS sets associated with the first CORESET.

In a possible implementation, the first information indicates the DMRS antenna port at the granularity of CORESET groups. To be specific, the first information indicates the first terminal device to use the L DMRS antenna ports to detect the first PDCCH on a fourth SS set. The fourth SS set is all SS sets associated with a first CORESET group, the first CORESET group is one of all CORESET groups of the first terminal device, and each CORESET group includes one or more CORESETs.

It may be understood that the L DMRS antenna ports are used for all PDCCH transmission performed by the first terminal device by using a same CORESET group, and DMRS antenna ports used for PDCCH transmission performed on different CORESET groups are independently configured, and may be the same or may be different. In other words, the first terminal device monitors, by using the L DMRS antenna ports, the PDCCH on all SS sets associated with the first CORESET group.

In a possible implementation, the first information indicates the DMRS antenna port at the granularity of SS sets. To be specific, the first information indicates the first terminal device to use the L DMRS antenna ports to detect the first PDCCH on a fifth SS set. The fifth SS set is one of all SS sets of the first terminal device.

It may be understood that the L DMRS antenna ports are used for all PDCCH transmission performed by the first terminal device by using a same SS set (for example, the fifth SS set). DMRS ports used for PDCCH transmission performed by the first terminal device on different SS sets are independently configured, and may be the same or may be different. In other words, the first terminal device monitors the PDCCH on the fifth SS set by using the L DMRS antenna ports.

In a possible implementation, the first information indicates the DMRS antenna port at the granularity of SS set groups. To be specific, the first information indicates the first terminal device to use the L DMRS antenna ports to detect the first PDCCH on a first SS set group. The first SS set group is one of all SS set groups of the first terminal device. Each SS set group includes one or more SS sets.

It may be understood that the L DMRS antenna ports are used for all PDCCH transmission performed by the first terminal device by using a same SS set group (for example, the first SS set group). DMRS ports used for PDCCH transmission performed by the first terminal device on different SS set groups are independently configured, and may be the same or may be different. In other words, the first terminal device monitors the PDCCH on the first SS set group by using the L DMRS antenna ports.

The first information may be carried in at least one of the following:
radio resource control (radio resource control, RRC) signaling, a system information block (system information block, SIB), a media access control control element (media access control control element, MAC CE), or downlink control information (downlink control information, DCI).

In a possible implementation, corresponding to a case in which the first information is carried in DCI, the DCI corresponds to a first terminal device group. The first terminal device group includes at least one terminal device. The first information is carried in a first information block of the DCI, the first information block corresponds to one or more terminal devices in the first terminal device group, and the one or more terminal devices include the first terminal device.

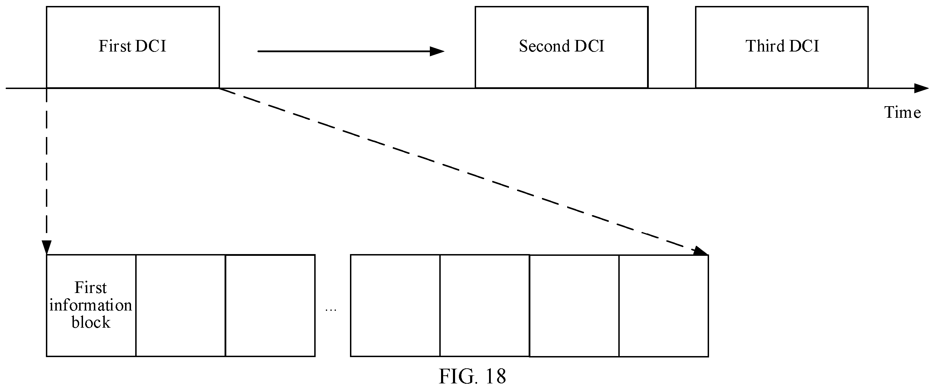

FIG. 18 is used as an example. The DCI carrying the first information may be common DCI for a terminal device group, for example, UE group common DCI, and specifically indicates the L DMRS antenna ports used by each terminal device in a terminal device group (for example, the first terminal device group). For example, the DCI carrying the first information includes X information blocks (blocks), a number of bits occupied by each information block is greater than or equal to 1, and each information block corresponds to one or more terminal devices, to indicate a PDCCH DMRS antenna port of a corresponding terminal device. X is a positive integer greater than or equal to 1.

FIG. 18 is used as an example. The first information is carried in a first information block, to indicate the L DMRS antenna ports to the first terminal device. For example, when the first PDCCH transmits second DCI, the first information block of first DCI indicates the DMRS antenna port used for monitoring the first PDCCH.

In the second implementation, the communication method in this application includes the following step.

S503b: The first terminal device determines the L DMRS antenna ports based on second information.

The second information is described with reference to the following three possible implementations.

In a possible implementation, the second information includes a radio network temporary identifier (radio network temporary identifier, RNTI) of the first terminal device, for example, a cell radio network temporary identifier (cell radio network temporary identifier, C-RNTI). In other words, the L DMRS antenna ports are determined based on the RNTI of the first terminal device.

For example, when L = 1, a sequence number of the L DMRS antenna port satisfies *n_{RNTI} mod N,* where *n_{RNTI}* represents a value of the RNTI of the first terminal device, and *mod* is a modulo operation.

In another example, when L > 1, a sequence number of a DMRS antenna port in the L DMRS antenna ports satisfies *n_{RNTI} mod N,* where *n_{RNTI}* represents a value of the RNTI of the first terminal device, and *mod* is a modulo operation. For example, the foregoing formula (that is, *n_{RNTI} mod N*) defines a sequence number of the first DMRS antenna port in the L DMRS antenna ports, and sequence numbers of the other (L-1) DMRS antenna ports increase sequentially. For example, a sequence number of an M^{th} DMRS antenna port in the L DMRS antenna ports satisfies (*n_{RNTI} mod N + M -* 1) *mod N.*

In a possible implementation, the second information includes an RNTI of the first terminal device and a sequence number of a first time unit. In other words, the L DMRS antenna ports are determined based on the RNTI of the first terminal device and the sequence number of the first time unit.

For example, when L = 1, a sequence number of the L DMRS antenna port satisfies ${Y}_{{n}_{s , f}^{μ}} mod N , {Y}_{{n}_{s , f}^{μ}} = \left(A⋅{Y}_{{n}_{s , f}^{μ} - 1}\right) mod D$, and *Y*₋₁ *= n_{RNTI},* where *n_{RNTI}* represents a value of the RNTI of the first terminal device, ${n}_{s , f}^{μ}$ represents the sequence number of the first time unit, *A* and *D* are positive integers, and *mod* is a modulo operation. For example, a value of *A* may be one of {39827, 39829, 39839}, and D = 65537.

In another example, when L > 1, a sequence number of a DMRS antenna port in the L DMRS antenna ports satisfies ${Y}_{{n}_{s , f}^{μ}} mod N , {Y}_{{n}_{s , f}^{μ}} = \left(A⋅{Y}_{{n}_{s , f}^{μ} - 1}\right) mod D$, and *Y*₋₁ *= n_{RNTI},* where *n_{RNTI}* represents a value of the RNTI of the first terminal device, ${n}_{s , f}^{μ}$ represents the sequence number of the first time unit, *A* and *D* are positive integers, and *mod* is a modulo operation. For example, the foregoing formula defines a sequence number of the first DMRS antenna port in the L DMRS antenna ports, and sequence numbers of the other (L-1) DMRS antenna ports increase sequentially. For example, a sequence number of an M^{th} DMRS antenna port in the L DMRS antenna ports satisfies $\left({Y}_{{n}_{s , f}^{μ}} mod N+M-1\right) mod N$*.*

The first time unit may be understood as a time unit in which the first terminal device detects the first PDCCH. For example, the first terminal device receives the first PDCCH in the first time unit through the L DMRS antenna ports. In other words, the L DMRS antenna ports are DMRS antenna ports used by the first terminal device in the first time unit.

In this case, because the first terminal device uses different sequence numbers of time units at different moments, the first terminal device determines different DMRS antenna ports at different moments, thereby reducing a probability of 'DMRS antenna port collision'.

In a possible implementation, the second information includes an RNTI of the first terminal device, a sequence number of a first time unit, and a sequence number of a first CORESET. In other words, the L DMRS antenna ports are determined based on the RNTI of the first terminal device, the sequence number of the first time unit, and the sequence number of the first CORESET.

For example, when L = 1, a sequence number of the L DMRS antenna port satisfies ${Y}_{p , {n}_{s , f}^{μ}} mod N , {Y}_{p , {n}_{s , f}^{μ}} = \left({A}_{p}⋅{Y}_{p , {n}_{s , f}^{μ} - 1}\right) mod D$, and *Y*_{*p,*-1} *= n_{RNTI},* where *n_{RNTI}* represents a value of the RNTI of the first terminal device, ${n}_{s , f}^{μ}$ represents the sequence number of the first time unit, p represents the sequence number of the first CORESET, *D* is a positive integer, and *mod* is a modulo operation. *D* = 65537.

*Aₚ* is a positive integer determined based on *p*. For example, all CORESETs of the first terminal device are classified into three groups, and DMRS antenna ports used for PDCCH transmission in each CORESET group are the same. In this case, *Aₚ* = 39827 for *pmod3* = 0; *Aₚ* = 39829 for *pmod3* = 1; and *Aₚ* = 39839 for *pmod3* = 2.

*Aₚ* = 39827 for *pmod3* = 0 may be understood as: *Aₚ* = 39827 in the case of *pmod3* = 0.

*Aₚ* = 39829 for *pmod3* = 1 may be understood as: *Aₚ* = 39829 in the case of *pmod3* = 1.

*Aₚ* = 39839 for *pmod3* = 2 may be understood as: *Aₚ* = 39839 in the case of *pmod3* = 2.

In another example, when L > 1, a sequence number of a DMRS antenna port in the L DMRS antenna ports satisfies ${Y}_{p , {n}_{s , f}^{μ}} mod N , {Y}_{p , {n}_{s , f}^{μ}} = \left({A}_{p}⋅{Y}_{p , {n}_{s , f}^{μ} - 1}\right) mod D$, and *Y*_{*p,*-1} = *n_{RNTI},* where *n_{RNTI}* represents a value of the RNTI of the first terminal device, ${n}_{s , f}^{μ}$ represents the sequence number of the first time unit, *p* represents the sequence number of the first CORESET, *D* is a positive integer, and *mod* is a modulo operation. *D* = 65537. For example, the foregoing formula defines a sequence number of the first DMRS antenna port in the L DMRS antenna ports, and sequence numbers of the other (L-1) DMRS antenna ports increase sequentially. For example, a sequence number of an M^{th} DMRS antenna port in the L DMRS antenna ports satisfies $\left({Y}_{p , {n}_{s , f}^{μ}} mod N+M-1\right) mod N$.

For the first time unit, refer to the description in Example 2. Details are not described again.

The first CORESET may be understood as a CORESET used by the first terminal device to detect the first PDCCH. For example, the first terminal device receives the first PDCCH on the first CORESET through the L DMRS antenna ports. In other words, the L DMRS antenna ports are DMRS antenna ports used by the first terminal device on the first CORESET.

In this case, because the first terminal device uses different sequence numbers of time units at different moments, the first terminal device determines different DMRS antenna ports at different moments, and/or because different CORESETs have different sequence numbers, DMRS antenna ports determined by the first terminal device when the PDCCH is detected on different CORESETs may also be different, thereby further reducing a probability of 'DMRS antenna port collision'.

It should be understood that, for Example 3, in a possible alternative implementation, *p* represents a sequence number of a first SS set, or *p* represents a sequence number of a first BWP, or *p* represents an identifier of the first terminal device. This is not limited in this application.

It should be noted that the DMRS antenna port collision may be understood as that different terminal devices use a same DMRS antenna port to receive the PDCCH. For example, N = 8, *n_{RNTI} =* 1 for a first terminal device, and *n_{RNTI} =* 9 for a second terminal device. In this case, DMRS antenna ports determined by the first terminal device based on Example 1 are the same as DMRS antenna ports determined by the second terminal device based on Example 1. This means that DMRS antenna port collision occurs.

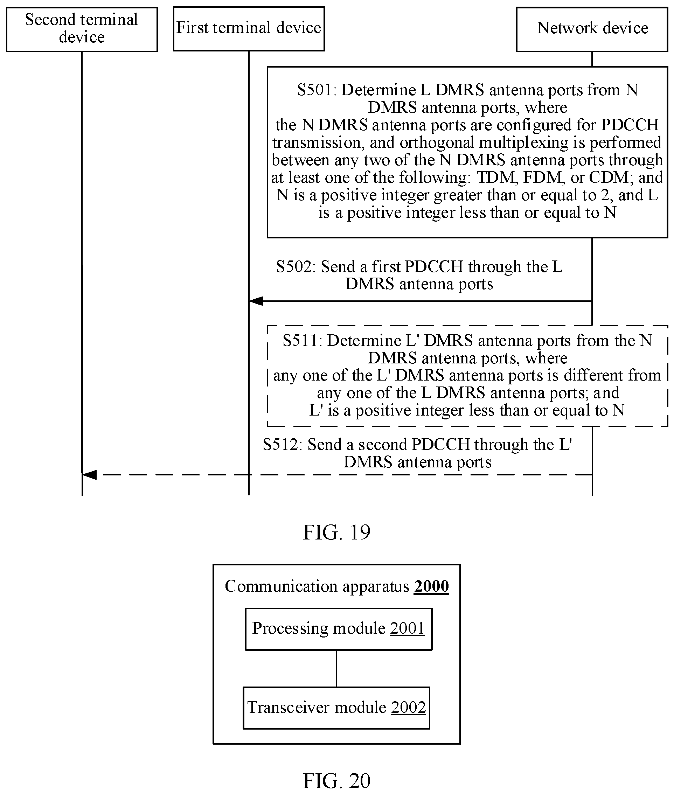

In some embodiments, for example, in an MU-MIMO transmission scenario, as shown in FIG. 19, this application further includes the following steps.

S511: The network device determines L' DMRS antenna ports from the N DMRS antenna ports.

For the network device and the N DMRS antenna ports, refer to the description of S501. Details are not described again.

Any one of the L' DMRS antenna ports is different from any one of the L DMRS antenna ports. L' is a positive integer less than or equal to N.

S512: The network device sends a second PDCCH to the second terminal device through the L' DMRS antenna ports. Correspondingly, the second terminal device receives the second PDCCH from the network device through the L' DMRS antenna ports.

The second PDCCH includes data information of the second PDCCH and a DMRS of the second PDCCH.

For example, for the DMRS of the second PDCCH, the network device sends the DMRS of the second PDCCH to the second terminal device through the L' DMRS antenna ports and at least one of a time-domain resource, a frequency-domain resource, or an OCC that is associated with the L' DMRS antenna ports. For details, refer to the description of S502. Details are not described again.

For the data information of the second PDCCH, the network device sends the data information of the second PDCCH to the second terminal device through the L' antenna ports for sending the DMRS of the second PDCCH, instead of sending the data information of the second PDCCH to the second terminal device through any one of the time-domain resource, the frequency-domain resource, and the OCC that is associated with the L' DMRS antenna ports. For details, refer to the description of S502. Details are not described again.

It should be noted that S511 and S512 are optional steps. For example, when L is less than N, the network device may perform S511 and S512. When L is equal to N, the network device may skip performing S511 and S512. This helps improve PDCCH demodulation performance.

It may be understood that, in the foregoing embodiments, the method and/or the steps implemented by the network device may alternatively be implemented by a component (such as a processor, a chip, a chip system, a circuit, a logic module, or software) that can be used in the network device; and the method and/or the steps implemented by the terminal device may alternatively be implemented by a component (such as a processor, a chip, a chip system, a circuit, a logic module, or software) that can be used in the terminal device. The chip system may include a chip, or the chip system may include a chip and another discrete component.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example and is merely logical function division, and may be other division during actual implementation.

FIG. 20 is a diagram of a structure of a communication apparatus 2000. The communication apparatus 2000 includes a processing module 2001 and a transceiver module 2002. The communication apparatus 2000 may be configured to implement a function of the foregoing network device or terminal device.

In some embodiments, the communication apparatus 2000 may further include a storage module (not shown in FIG. 20) configured to store program instructions and data.

In some embodiments, the transceiver module 2002 may also be referred to as a transceiver unit, and is configured to implement a sending function and/or a receiving function. The transceiver module 2002 may include a transceiver circuit, a transceiver machine, a transceiver, or a communication interface.

In some embodiments, the transceiver module 2002 may include a receiving module and a sending module that are respectively configured to perform receiving and sending steps performed by the network device or the terminal device in the foregoing method embodiments and/or configured to support another process of the technology described in this specification. The processing module 2001 may be configured to perform processing (for example, determining) steps performed by the network device or the terminal device in the foregoing method embodiments and/or configured to support another process of the technology described in this specification.

All related content of the steps in the foregoing method embodiments may be cited in function descriptions of the corresponding functional modules. Details are not described herein again.

Optionally, in this application, that the transceiver module receives/sends information may alternatively be understood as that the processing module receives/sends the information by using the transceiver module. That the processing module receives/sends the information by using the transceiver module may alternatively be understood as that the processing module controls the transceiver module to receive/send the information. Alternatively, that the processing module sends the information by using the transceiver module may be understood as that the processing module outputs the information to the transceiver module, and the transceiver module sends the information; and that the processing module receives the information by using the transceiver module may be understood as that the transceiver module receives the information and inputs the information to the processing module.

In this application, the communication apparatus 2000 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 2000 in FIG. 20 is a chip or a chip system, a function/implementation process of the transceiver module 2002 may be implemented through an input/output interface (or a communication interface) of the chip or the chip system, and a function/implementation process of the processing module 2001 may be implemented by using a processor (or a processing circuit) of the chip or the chip system.

The communication apparatus 2000 provided in this embodiment may perform the foregoing methods. Therefore, for technical effects that can be achieved by the communication apparatus 2000, refer to the foregoing method embodiments. Details are not described herein again.

In a possible product form, the network device or the terminal device in embodiments of this application may alternatively be implemented by using the following: one or more field programmable gate arrays (field programmable gate array, FPGA), a programmable logic device (programmable logic device, PLD), a controller, a state machine, gate logic, a discrete hardware component, any other appropriate circuit, or any combination of circuits that can perform various functions described throughout this application.

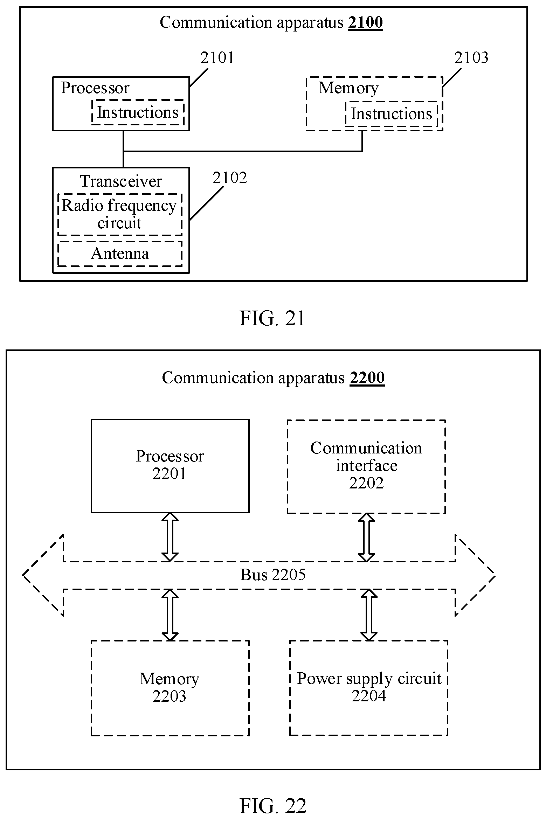

In another possible product form, the network device or the terminal device in embodiments of this application may be implemented by using a general bus architecture. For ease of description, FIG. 21 is a diagram of a structure of a communication apparatus 2100 according to an embodiment of this application. The communication apparatus 2100 includes a processor 2101 and a transceiver 2102. The communication apparatus 2100 may be a network device, or a chip or a chip system in the network device. Alternatively, the communication apparatus 2100 may be a terminal device, or a chip or a module in the terminal device. FIG. 21 shows only main components in the communication apparatus 2100. In addition to the processor 2101 and the transceiver 2102, the communication apparatus 2100 may further include a memory 2103 and an input/output apparatus (which is not shown in the figure).

Optionally, the processor 2101 is mainly configured to process a communication protocol and communication data, control the entire communication apparatus, execute a software program, and process data of the software program. The memory 2103 is mainly configured to store a software program and data. The transceiver 2102 may include a radio frequency circuit and an antenna. The radio frequency circuit is mainly configured to perform conversion between a baseband signal and a radio frequency signal, and process the radio frequency signal. The antenna is mainly configured to send and receive a radio frequency signal in a form of an electromagnetic wave. The input/output apparatus, such as a touchscreen, a display, or a keyboard, is mainly configured to receive data input by a user and output data to the user.

Optionally, the processor 2101, the transceiver 2102, and the memory 2103 may be connected through a communication bus.

It should be noted that the memory 2103 may be independent of the processor 2101, or may be integrated with the processor 2101. The memory 2103 may be located inside the communication apparatus 2100, or may be located outside the communication apparatus 2100. This is not limited.

After the communication apparatus is powered on, the processor 2101 may read a software program in the memory 2103, interpret and execute instructions of the software program, and process data of the software program. When data needs to be sent wirelessly, the processor 2101 performs baseband processing on the to-be-sent data, and then outputs a baseband signal to a radio frequency circuit. The radio frequency circuit performs radio frequency processing on the baseband signal, and then sends a radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 2101. The processor 2101 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in a hardware implementation, a person skilled in the art may figure out that the communication apparatus 2000 may be in a form of the communication apparatus 2100 shown in FIG. 21.

In an example, the function/implementation process of the processing module 2001 in FIG. 20 may be implemented by the processor 2101 in the communication apparatus 2100 shown in FIG. 21 calling computer-executable instructions stored in the memory 2103. The function/implementation process of the transceiver module 2002 in FIG. 20 may be implemented by the transceiver 2102 in the communication apparatus 2100 shown in FIG. 21.

In still another possible product form, the network device or the terminal device in this application may be of a composition structure shown in FIG. 22, or include components shown in FIG. 22. FIG. 22 is a diagram of composition of a communication apparatus 2200 according to this application.

As shown in FIG. 22, the communication apparatus 2200 includes at least one processor 2201. Optionally, the communication apparatus further includes a communication interface 2202.

When related program instructions are executed in the at least one processor 2201, the apparatus 2200 may be enabled to implement the method provided in any one of the foregoing embodiments and any possible design thereof. Alternatively, the processor 2201 is configured to implement, through a logic circuit or by executing code instructions, the method provided in any one of the foregoing embodiments and any possible design thereof.

The communication interface 2202 may be configured to receive the program instructions and transmit the program instructions to the processor. Alternatively, the communication interface 2202 may be configured to perform communication interaction between the communication apparatus 2200 and another communication device, for example, exchange control signaling and/or service data. For example, the communication interface 2202 may be configured to receive a signal from an apparatus other than the communication apparatus 2200, and transmit the signal to the processor 2201, or send a signal from the processor 2201 to a communication apparatus other than the communication apparatus 2200.

Optionally, the communication interface 2202 may be a code and/or data read/write interface circuit, or the communication interface 2202 may be a signal transmission interface circuit between a communication processor and a transceiver, or a pin of a chip.

Optionally, the communication apparatus 2200 may further include at least one memory 2203, and the memory 2203 may be configured to store related program instructions and/or data required.

It should be noted that the memory 2203 may be independent of the processor 2201, or may be integrated with the processor 2201. The memory 2203 may be located inside the communication apparatus 2200, or may be located outside the communication apparatus 2200. This is not limited.

Optionally, the communication apparatus 2200 may further include a power supply circuit 2204, and the power supply circuit 2204 may be configured to supply power to the processor 2201. The power supply circuit 2204 may be located with the processor 2201 in a same chip, or may be located in a chip other than a chip in which the processor 2201 is located.

Optionally, the communication apparatus 2200 may further include a bus 2205, and parts of the communication apparatus 2200 may be interconnected through the bus 2205.

In some embodiments, in a hardware implementation, a person skilled in the art may figure out that the communication apparatus 2000 shown in FIG. 20 may be in a form of the communication apparatus 2200 shown in FIG. 22.

In an example, the function/implementation process of the processing module 2001 in FIG. 20 may be implemented by the processor 2201 in the communication apparatus 2200 shown in FIG. 22 calling computer-executable instructions stored in the memory 2203. The function/implementation process of the transceiver module 2002 in FIG. 20 may be implemented by the communication interface 2202 in the communication apparatus 2200 shown in FIG. 22.

It should be noted that the structure shown in FIG. 22 does not constitute a specific limitation on the network device or the terminal device. For example, in some other embodiments of this application, the network device or the terminal device may include more or fewer components than those shown in the figure, or some components may be combined, or some components may be split, or different component arrangements may be used. The components shown in the figure may be implemented by hardware, software, or a combination of software and hardware.

Optionally, in this application, the processor may be a central processing unit (central processing unit, CPU), or the processor may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

Optionally, in this application, the memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of a random access memory (random access memory, RAM) are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

Optionally, in an embodiment of this application, the power supply circuit includes but is not limited to at least one of the following: a power supply line, a power supply subsystem, a power management chip, a power consumption management processor, or a power consumption management control circuit.

In some embodiments, an embodiment of this application further provides a communication apparatus. The communication apparatus includes a processor configured to implement the method in any one of the foregoing method embodiments.

In a possible implementation, the communication apparatus further includes a memory. The memory is configured to store a necessary computer program and data. The computer program may include instructions. The processor may call the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium storing a computer program or instructions. When the computer program or instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatus, and unit, refer to a corresponding process in the foregoing method embodiments. Details are not described herein again.

It may be understood that the system, apparatus, and method described in this application may alternatively be implemented in another manner. For example, the described apparatus embodiments are merely examples. For example, division into the units is merely logical function division and may be other division during actual implementation. For example, a plurality of units or components may be combined or integrated into another system, or some features may be omitted or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separated, that is, may be located in one place, or may be distributed on a plurality of network units. Components displayed as units may or may not be physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When implemented by using a software program, all or some of the foregoing embodiments may be implemented in a form of a computer program product. The computer program product includes one or more computer instructions. When the computer program instructions are loaded and executed on a computer, all or some of the procedure or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce great effects.

## Claims

1. A communication method, comprising:
determining L demodulation reference signal DMRS antenna ports from N DMRS antenna ports, wherein the N DMRS antenna ports are configured for physical downlink control channel PDCCH transmission, orthogonal multiplexing is performed between any two of the N DMRS antenna ports through at least one of the following: time division multiplexing TDM, frequency division multiplexing FDM, or code division multiplexing CDM, N is a positive integer greater than or equal to 2, and L is a positive integer less than or equal to N; and
sending a DMRS of a first PDCCH through the L DMRS antenna ports.

2. The method according to claim 1, wherein
when orthogonal multiplexing is performed between any two of the N DMRS antenna ports through the CDM,
any two of the N DMRS antenna ports are associated with different frequency domain orthogonal cover codes OCCs and/or different time domain-OCCs.

3. The method according to claim 1, wherein
when orthogonal multiplexing is performed between any two of the N DMRS antenna ports through the CDM and the FDM,
the N DMRS antenna ports belong to at least two CDM groups, and each of the at least two CDM groups comprises some of the N DMRS antenna ports;
any two DMRS antenna ports in any one of the at least two CDM groups are associated with different frequency domain-OCCs and/or different time domain-OCCs; and
any two of the at least two CDM groups are associated with different frequency-domain resources.

4. The method according to any one of claims 1 to 3, wherein
a transmission resource of the first PDCCH comprises a plurality of resource element groups REGs, each of the plurality of REGs comprises M first resource elements REs, the M first REs are configured to carry a DMRS of a PDCCH, and M is a positive integer greater than 3, wherein
each of the plurality of REGs comprises one orthogonal frequency division multiplexing OFDM symbol in time domain and one resource block RB in frequency domain.

5. The method according to any one of claims 1 to 3, wherein
a time-domain resource of the first PDCCH comprises K symbols, the K symbols comprise a first symbol and a second symbol, and K is a positive integer greater than or equal to 2;
the first PDCCH comprises data information of the first PDCCH and the DMRS of the first PDCCH; and
the data information of the first PDCCH occupies the first symbol, and the DMRS of the first PDCCH occupies the second symbol.

6. The method according to claim 2 or 3, wherein
a length of the frequency domain-OCC is 2 or 4, and a length of the time domain-OCC is 2 or 4.

7. The method according to any one of claims 1 to 6, wherein
a value of the N comprises 2^{T} or 3*Q, and T and Q are positive integers.

8. The method according to any one of claims 1 to 7, wherein the method further comprises:
sending first information, wherein
the first information indicates the L antenna ports; and
the first information is carried in one of the following: radio resource control RRC signaling, a system information block SIB, downlink control information DCI, or a media access control control element MAC CE.

9. The method according to claim 8, wherein
that the first information indicates the L antenna ports comprises:
the first information indicates a first terminal device to use the L DMRS antenna ports to detect the first PDCCH on a first search space set SS set, wherein
the first SS set is all SS sets associated with all control resource sets CORESETs of the first terminal device; or
the first SS set is all SS sets associated with all CORESETs on a first bandwidth part BWP, and the first BWP is one of all BWPs of the first terminal device; or
the first SS set is all SS sets associated with a first CORESET, and the first CORESET is one of all CORESETs of the first terminal device; or
the first SS set is one of all SS sets of the first terminal device.

10. The method according to claim 8, wherein
that the first information indicates the L antenna ports comprises:
the first information indicates a first terminal device to use the L DMRS antenna ports to detect the first PDCCH on all SS sets associated with a first CORESET group, wherein the first CORESET group is one of all CORESET groups of the first terminal device; or
the first information indicates a first terminal device to use the L DMRS antenna ports to detect the first PDCCH on a first SS set group, wherein the first SS set group is one of all SS set groups of the first terminal device.

11. The method according to any one of claims 8 to 10, wherein
the DCI corresponds to a first terminal device group, and the first terminal device group comprises at least one terminal device; and
the first information is carried in a first information block of the DCI, the first information block corresponds to one or more terminal devices in the first terminal device group, and the one or more terminal devices comprise the first terminal device.

12. The method according to any one of claims 1 to 7, wherein
the L DMRS antenna ports are determined based on a radio network temporary identifier RNTI of a first terminal device; or
the L DMRS antenna ports are determined based on a radio network temporary identifier RNTI of a first terminal device and a sequence number of a first time unit; or
the L DMRS antenna ports are determined based on a radio network temporary identifier RNTI of a first terminal device, a sequence number of a first time unit, and a sequence number of a first CORESET.

13. The method according to claim 12, wherein
L= 1;
a sequence number of the L DMRS antenna port satisfies *n_{RNTI} mod N,* wherein *n_{RNTI}* represents a value of the RNTI; or
a sequence number of the L DMRS antenna port satisfies ${Y}_{{n}_{s , f}^{μ}} mod N , {Y}_{{n}_{s , f}^{μ}} = \left(A⋅{Y}_{{n}_{s , f}^{μ} - 1}\right) mod D$ , and *Y*₋₁ *= n_{RNTI},* wherein *n_{RNTI}* represents a value of the RNTI, ${n}_{s , f}^{μ}$ represents the sequence number of the first time unit, and A and *D* are positive integers; or
a sequence number of the L DMRS antenna port satisfies ${Y}_{p , {n}_{s , f}^{μ}} mod N , {Y}_{p , {n}_{s , f}^{μ}} = \left({A}_{p}⋅{Y}_{p , {n}_{s , f}^{μ} - 1}\right) mod D$ , and *Y*_{*p,*-1} *= n_{RNTI},* wherein *n_{RNTI}* represents a value of the RNTI, ${n}_{s , f}^{μ}$ represents the sequence number of the first time unit, *p* represents the sequence number of the first CORESET, *D* is a positive integer, and *Aₚ* is a positive integer determined based on p.

14. The method according to any one of claims 1 to 13, wherein the method further comprises:
determining L' DMRS antenna ports from the N DMRS antenna ports, wherein any one of the L' DMRS antenna ports is different from any one of the L DMRS antenna ports, and L' is a positive integer less than or equal to N; and
sending a DMRS of a second PDCCH through the L' DMRS antenna ports, wherein the second PDCCH is different from the first PDCCH.

15. A communication method, comprising:
determining L demodulation reference signal DMRS antenna ports, wherein the L DMRS antenna ports are one or more of N DMRS antenna ports, the N DMRS antenna ports are configured for physical downlink control channel PDCCH transmission, orthogonal multiplexing is performed between any two of the N DMRS antenna ports through at least one of the following: time division multiplexing TDM, frequency division multiplexing FDM, or code division multiplexing CDM, N is a positive integer greater than or equal to 2, and L is a positive integer less than or equal to N; and
receiving a DMRS of a first PDCCH through the L DMRS antenna ports.

16. The method according to claim 15, wherein the method further comprises:
receiving first information, wherein
the first information indicates the L antenna ports; and
the first information is carried in one of the following: radio resource control RRC signaling, a system information block SIB, downlink control information DCI, or a media access control control element MAC CE.

17. A communication apparatus, wherein the communication apparatus is configured to implement the method according to any one of claims 1 to 14.

18. The communication apparatus according to claim 17, wherein the communication apparatus comprises a network device or a chip.

19. A communication apparatus, wherein the communication apparatus is configured to implement the method according to claim 15 or 16.

20. The communication apparatus according to claim 19, wherein the communication apparatus comprises a terminal device or a chip.

21. A computer-readable storage medium, storing a computer program or instructions, wherein when the computer program or the instructions are executed, the method according to any one of claims 1 to 14 is implemented, or the method according to claim 15 or 16 is implemented.

22. A computer program product, wherein when the computer program product is run, the method according to any one of claims 1 to 14 is performed, or the method according to claim 15 or 16 is performed.
